# EUROPEAN PATENT SPECIFICATION

(11) **EP 4 136 491 B1**
(45) Date of publication and mention of the grant of the patent: **19.08.2026**
(21) Application number: 21721974.0
(22) Date of filing: 16.04.2021
(51) Int. Cl.: G03B 3/10, G03B 30/00, G02B 7/08, G02B 27/64

(54) **ACTUATOR ASSEMBLY**
AKTUATORANORDNUNG
ENSEMBLE ACTIONNEUR

(30) Priority: 16.04.2020 GB 202005570
(43) Date of publication of application: 22.02.2023
(73) Proprietor: Cambridge Mechatronics Limited, Cambridge CB4 0WG (GB)
(72) Inventor: BROWN, Andrew Benjamin Simpson, Cambridge Cambridgeshire CB4 1YG (GB); HOWARTH, James, Cambridge Cambridgeshire CB4 1YG (GB); BUNTING, Stephen, Cambridge Cambridgeshire CB4 1YG (GB); OOI, David, Cambridge Cambridgeshire CB4 1YG (GB)
(74) Representative: Cambridge Mechatronics Limited
(86) International application number: PCT/GB2021/050921
(87) International publication number: WO 2021/209768

(56) References cited:
- WO-A2-2012/038703
- US-A1- 2007 109 412
- US-A1- 2017 285 362

## Description

### Field

The present application relates to an actuator assembly, particularly an actuator assembly comprising a plurality of lengths of shape-memory alloy (SMA) wire.

### Background

Such an actuator assembly may be used, for example, in a camera to move a lens assembly in directions perpendicular to the optical axis so as to provide optical image stabilization (OIS). Where such a camera is to be incorporated into a portable electronic device such as a mobile telephone, miniaturization can be important.

WO 2013/175197 A1 describes an SMA actuation apparatus which moves a movable element relative to a support structure in two orthogonal directions using a total of four SMA actuator wires each connected at its ends between the movable element and the support structure and extending perpendicular to the primary axis. None of the SMA actuator wires are collinear, but the SMA actuator wires have an arrangement in which they are capable of being selectively driven to move the movable element relative to the support structure to any position in said range of movement without applying any net torque to the movable element in the plane of the two orthogonal directions around the primary axis.

WO 2019/243849 A1 describes a shape memory alloy actuation apparatus which comprises a support structure and a movable element. A helical bearing arrangement supported on the movable element on the support structure guides helical movement of the movable element with respect to the support structure around a helical axis. At least one shape memory alloy actuator wire is connected between the support structure and the movable element in, or at an acute angle to, a plane normal to the helical axis, so as to drive rotation of the movable element around the helical axis which the helical bearing arrangement converts into said helical movement.

WO 2019/086855 A1 describes a camera with an actuator assembly including a support platform, a moving platform that supports a lens assembly, SMA wires connected to the support platform and the moving platform, bearings to bear the moving platform on the support platform, and two arms extending between the support platform and the moving platform WO 2012/038703 A2 discloses a camera unit comprising an image sensor and a lens system for focussing an image on the image sensor, the camera unit being supported on the support structure in a manner allowing the camera unit to tilt relative to the optical axis of the lens system.

### Summary

The scope of the preset invention is defined by the appended claims.

According to a first aspect of the present invention there is provided an actuator assembly. The actuator assembly comprises a first part, a first bearing arrangement and a platform. The first bearing arrangement supports the platform on the first part. The platform is tiltable about first and/or second axes which are not parallel with respect to each other and which are perpendicular to a primary axis passing through the actuator assembly. The actuator assembly further comprises a second bearing arrangement and a second part. The second bearing arrangement supports the second part on the platform such that the second part tilts with the platform. The actuator assembly further comprises a drive arrangement comprising four lengths of shape memory alloy wire. The four lengths of shape memory alloy wire are connected (or "coupled") to the second part and the first part of the actuator assembly. The first bearing arrangement is configured to guide tilting of the platform about the first and/or second axes and to constrain rotation of the platform about the primary axis and translation along the primary axis. The platform defines a first plane which is tiltable and which has a normal such that tilting the platform tilts the normal away from the primary axis. The second bearing arrangement is configured to constrain tilting of the second part with respect to the platform, to constrain lateral movement of the second part perpendicular to the normal, and to guide axial movement of the second part along the normal relative to the platform.

Thus, the actuator assembly can be used to provide OIS and AF using module tilt with four lengths of shape memory alloy wires.

### Brief Description of the Drawings

Certain embodiments of the present invention will now be described, by way of example only, with reference to the accompanying drawings, in which:
Figure 1 is a schematic diagram of a camera incorporating a shape memory alloys (SMA) actuator assembly;
Figure 2 schematically illustrates possible degrees of freedom which may be provided by an SMA actuator assembly;
Figure 3 is a schematic plan view of a first type of drive arrangement which may be used in an SMA actuator assembly;
Figure 4 is a perspective view of a first SMA actuator assembly employing the first type of drive arrangement shown in Figure 3;
Figure 5A is a schematic plan view of a second type of drive arrangement which may be used in an SMA actuator assembly;
Figures 5B and 5B are schematic side and end views of the second type of drive arrangement shown in Figure 5A'
Figure 6 is a schematic side view of a two-bar link bearing;
Figure 7A is a plan view of a first two-by-two parallel bar link bearing (or "simple flexure");
Figure 7B is a side view of the simple flexure shown in Figure 7A;
Figure 8 is a plan view of a second simple flexure;
Figure 9 is an exploded projection of a z-flexure;
Figure 10 is a projection of a first pivot bearing;
Figure 11A is a side view of the first pivot bearing shown in Figure 10;
Figure 11B is a side view of a second pivot bearing;
Figure 11C is a side view of the third pivot bearing;
Figure 11D is a side view of the fourth pivot bearing;
Figure 12A is a side view of a first planar bearing;
Figure 12B is an exploded projection view of the first planar bearing shown in Figure 12A;
Figure 13 is a side view of a second planar bearing;
Figure 14 is a plan view of a first gimbal bearing;
Figure 15 is a plan view of a second gimbal bearing;
Figure 16A is an exploded projection of a z-translation bearing;
Figure 16B is a cross-sectional view of a block and bearings shown in Figure 16A;
Figure 17 is a perspective view of a helical flexure bearing;
Figure 18A is an exploded projection of a helical bearing;
Figure 18B is a projection the helical bearing shown in Figure 18A;
Figure 19 is a schematic exploded projection of a first actuator assembly;
Figure 20 is a schematic plan view of the first actuator assembly shown in Figure 19;
Figure 21 is a schematic cross-sectional view of the first actuator assembly shown in Figure 20 taken along the line A-A';
Figure 22 is schematic block diagram of the first actuator assembly shown in Figure 19;
Figure 23 is schematic block diagram of a second actuator assembly;
Figure 24 schematically illustrates tilting of first plane in which a platform lies and tilting of a second plane in which a second part lies;
Figure 25 schematically illustrates movement of the second plane shown in Figure 24 along a normal to the first plane when tilted;
Figure 26 is a schematic exploded projection of a third actuator assembly;
Figure 27 is a schematic side view of the third actuator assembly shown in Figure 24;
Figure 28 is schematic block diagram of the third actuator assembly shown in Figure 24; and
Figure 29 is schematic exploded projection of a fourth actuator assembly.

### Detailed Description

### Camera

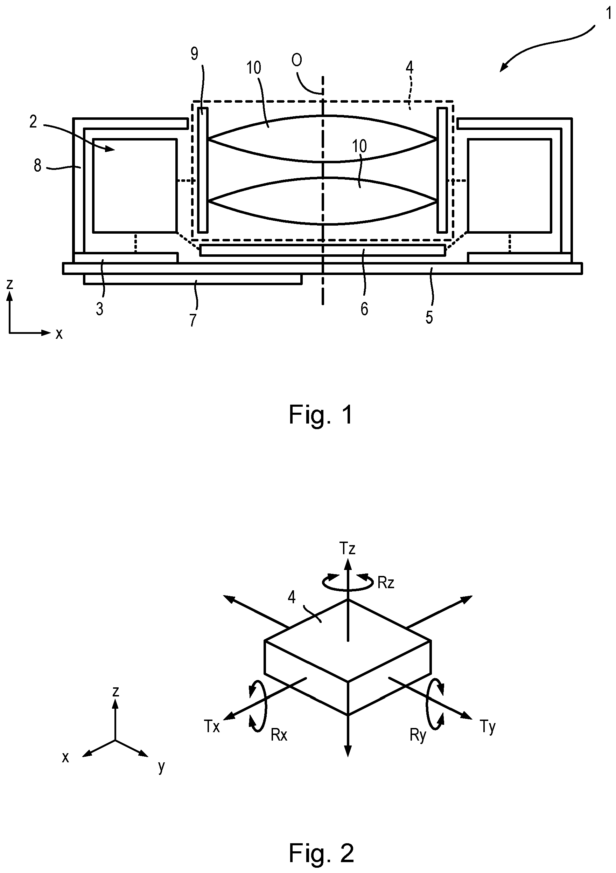

Referring to Figure 1, a camera 1 incorporating an SMA actuator assembly 2 (herein also referred to as an "SMA actuator" or simply an "actuator") is shown.

The camera 1 includes first and second parts 3, 4.

The first part 3 of the camera takes the form of a support structure and includes a base 5. The second part 4 of the camera takes the form a lens assembly suspended on the first part 3 of the camera 1 by the SMA actuator assembly 2.

An image sensor 6 is disposed in front of a front side of the base 5, *i.e.,* the image sensor 6 is interposed between the lens assembly 4 and the base 5.

The SMA actuator assembly 2 supports the lens assembly 4 and the image sensor 6 in a manner allowing one or more degrees-of-freedom of the lens assembly 4 relative to the support structure 3. The lens assembly 4 has an optical axis O.

The camera 1 includes an integrated circuit (IC) 7, which implements a control circuit, and also a gyroscope sensor (not shown). The support structure 3 also includes a can 8 which protrudes forwardly from the base 5 to encase and protect the other components of the camera 1.

The lens assembly 4 includes a lens carriage 9 in the form of a cylindrical body supporting two lenses 10 arranged along the optical axis O. In general, any number of one or more lenses 10 may be included. Preferably, each lens 10 has a diameter of up to about 20 mm. The camera 1 can therefore be referred to as a miniature camera.

The lens assembly 4 is arranged to focus an image onto the image sensor 6. The image sensor 6 captures the image and may be of any suitable type, for example, a charge-coupled device (CCD) or a complementary metal-oxide-semiconductor (CMOS) device.

The lenses 10 are supported on the lens carriage 9 and the lens carriage 9 is supported by the SMA actuator assembly 2 such that the lens assembly 4 is movable along the optical axis O relative to the support structure 3, for example to provide focussing or zoom. Although all the lenses 10 are fixed to the lens carriage 9 in this example, in general, one or more of the lenses 10 may be mounted to a component other than the lens carriage 9, and may be fixed in place relative to the image sensor 6, leaving at least one of the lenses 10 attached to the lens carriage and movable along the optical axis O relative to the image sensor 6.

In general, the lens assembly 4 may be moved orthogonally to the optical axis O in use, relative to the image sensor 6, with the effect that the image on the image sensor 6 is moved. For example, if a set of right-handed orthogonal axes x, y, z is aligned so that a third axis z is oriented substantially parallel to the optical axis O, then the lens assembly 4 may be moveable in a direction parallel to the first x axis and/or in a direction parallel to the second y axis. This is used to provide optical image stabilization (OIS), compensating for movement of the camera 1, which may be caused by hand shake etc. The movement providing OIS need not be constrained to the x-y plane. Additionally or alternatively, OIS functionality may be provided by tilting the lens assembly 4, or both the lens assembly 4 and the image sensor 6, about an axis parallel to the first x axis and/or about an axis parallel to the second y axis. Additionally, the lens assembly 4, or at least one lens 10 thereof, may be moved parallel to the optical axis O (parallel to the third axis z) to provide focussing of an image formed on the image sensor 6, for example as part of an automatic focussing (AF) function.

This specification is concerned with examples of SMA actuator assemblies 2 which provide a combination of automatic focussing (AF) and optical image stabilisation (OIS) that is based on tilting the lens assembly 4 and the image sensor 6 relative to the support structure 3.

### Degrees of freedom

Referring also to Figure 2, possible types of movement (or degrees of freedom) which may be provided by an SMA actuator assembly 2 are illustrated.

A first degree-of-freedom (DOF) Tx corresponds to movement parallel to the first axis x. A second DOF Ty corresponds to movement parallel to the second axis y. A third DOF Tz corresponds to movement parallel to the third axis z, which is oriented substantially parallel to the optical axis O. The third DOF Tz corresponds to movement of the lens assembly 3 towards or away from the image sensor 6. The first, second and third axes x, y, z form a right-handed Cartesian coordinate system. A fourth DOF Rx corresponds to rotation about an axis parallel to the first axis x. A fifth DOF Ry corresponds to rotation about an axis parallel to the second axis y. A sixth DOF Rz corresponds to rotation about an axis parallel to the third axis z. In some examples, one or more of the axes may be attached to (and move and/or rotate/tilt with) a first part, a second part, or any other elements of an SMA actuator assembly 2 or camera 1. For example, an origin may be an element of the camera 1 such as the image sensor 6 or a lens 10 of the lens assembly 4.

Motions of the lens assembly 4 relative to the support structure 3 may be broken down into components of any or all of the first to sixth DOF (movements) Tx, Ty, Tz, Rx, Ry, Rz. Although described as degrees-of-freedom, in some cases translations and rotations may be linked. For example, a given translation Tz along the third axis z may be tied to a corresponding rotation Rz so that motion of the lens assembly 4 is helical. Such linked motions may be referred to using a pair enclosed in square brackets to avoid confusion with more independent motions, for example [Tz, Rz] will denote a helical motion as described hereinafter.

This specification concerns SMA actuator assemblies 2 which provide the motions corresponding to the four and fifth DOF Rx, Ry, and a linked helical motion [Tz, Rz]. The four and fifth DOF Rx, Ry provide the OIS functionality herein, whilst the motion [Tz, Rz] parallel to the third axis z provide AF functionality. Other motions are constrained by the SMA actuator assemblies 2 described herein.

### Shape-memory alloy drive assemblies

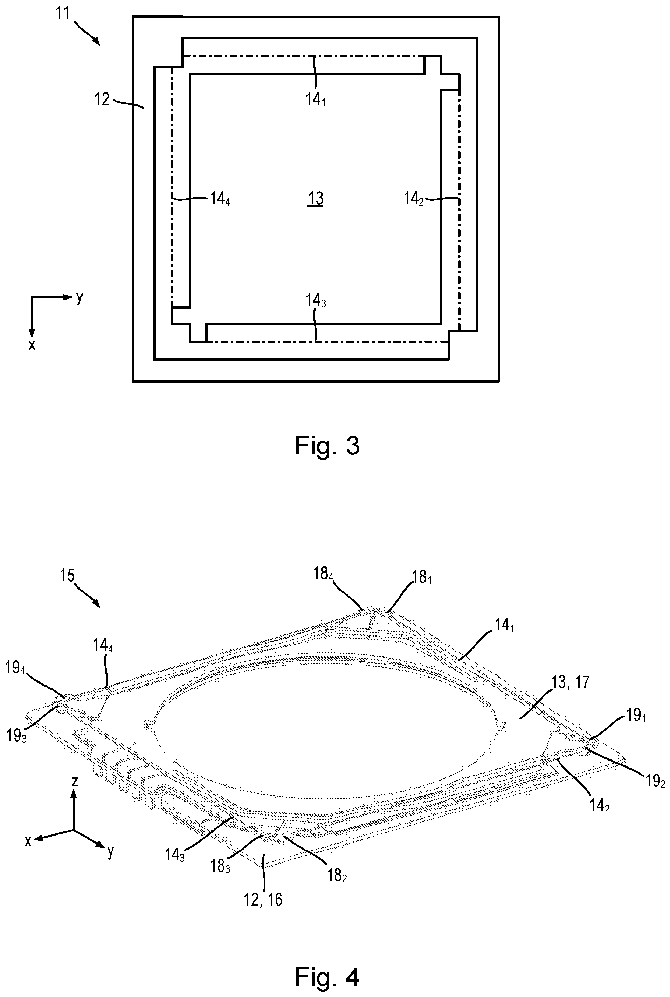

Referring also to Figure 3, a first type of drive arrangement 11 which may be included in SMA actuator assemblies 2 is shown schematically.

The first drive arrangement 11 includes a first structure 12 and a second structure 13. The second structure 13 is generally supported within a boundary defined by the first structure 12, for example using one or more bearings as described hereinafter. The second structure 12 generally need not provide a complete or uninterrupted boundary. The first and second structures 12, 13 may take the form of respective patterned sheets of metal, e.g., etched or machined stainless steel, and may be coated with an electrically-insulating dielectric material.

Four SMA wires 14₁, 14₂, 14₃, 14₄ (shown in chain to aid visibility) form a loop around the second structure 13. First 14₁ and third 14₃ SMA wires extend substantially parallel to the first axis x and are spaced apart in a direction parallel to the second axis y. Contraction of the first SMA wire 14₁ will exert a force on the second structure 13 in the negative -x direction, whereas contraction of the third SMA wire 14₃ will exert a force on the second structure 13 in the positive +x direction. Second 14₂ and fourth 14₄ SMA wires extend substantially parallel to the second axis y and are spaced apart in a direction parallel to the first axis x. Contraction of the second SMA wire 14₂ will exert a force on the second structure 13 in the negative -y direction, whereas contraction of the fourth SMA wire 14₄ will exert a force on the second structure 13 in the positive +y direction.

Other examples configurations may be used, and further details are provided in WO 2017/055788 A1 and WO 2019/08685E A1.

The position of the second structure 13 relative to the first structure 12 perpendicular to the optical axis O is controlled by selectively varying the temperatures of the SMA wires 14₁, 14₂, 14₃, 14₄. This is achieved by passing selective drive signals through the SMA wires 14₁, 14₂, 14₃, 14₄ that provide resistive heating. Heating is provided directly by the drive current. Cooling is provided by reducing or ceasing the drive current to allow the SMA wires 14₁, 14₂, 14₃, 14₄ to cool by conduction, convection and radiation to its surroundings.

In operation, the SMA wires 14₁, 14₂, 14₃, 14₄ are selectively driven to move the second structure 13 relative to the first structure 12 (or vice versa) in any lateral direction (i.e., a direction within a plane parallel to first and second axes x, y and perpendicular to the optical axis O and third axis z).

Further details are also provided in WO 2013/175197 A1.

Taking the example of the set of four SMA wires 14₁, 14₂, 14₃, 14₄, the SMA wires 14₁, 14₂, 14₃, 14₄ have an arrangement in a loop at different angular positions around the optical axis O (corresponding here to the third axis z) to provide two pairs of opposed SMA wires 14₁ & 14₃, 14₂ & 14₄ that are substantially perpendicular to each other. Thus, each pair of opposed SMA wires 14₁ & 14₃, 14₂ & 14₄ is capable on selective driving of moving the second structure 13 in one of two perpendicular directions orthogonal to the optical axis O. As a result, the SMA wires 14₁, 14₂, 14₃, 14₄ are capable of being selectively driven to move the second structure 13 relative to the first structure 12 to any position in a range of movement in a plane orthogonal to the optical axis O. Another way to view this movement is that contraction of any pair of adjacent SMA wires (e.g. SMA wires 14₃, 14₄) will move the second structure 13 in a direction bisecting the pair of SMA actuator wires (diagonally in Fig. 3). Moreover, the SMA wires 14₁, 14₂, 14₃, 14₄ are capable of being actuated to generate torque about an axis parallel to the primary axis z. In particular, contraction of one pair of opposite SMA wires (e.g. SMA wires 14₁, 14₃) will produce a torque on the second structure 13 in one sense about an axis parallel to the primary axis z, and contraction of the other pair of opposite SMA wires (e.g. SMA wires 14₂, 14₄) will produce a torque in the other sense. The generation of torque and a resulting rotation may be substantially independent of the translations along directions parallel to the first and/or second axes x, y, at least over a part of the range of motion of the drive arrangement 11. The magnitude of the range of movement depends on the geometry and the range of contraction of the SMA wires 14₁, 14₂, 14₃, 14₄ within their normal operating parameters.

On heating of one of the SMA wires 14₁, 14₂, 14₃, 14₄, the stress in the SMA wire 14₁, 14₂, 14₃, 14₄ increases and it contracts, causing movement of the second structure 13 relative to the first structure 12. A range of movement occurs as the temperature of the SMA increases over a range of temperature in which there occurs the transition of the SMA material from the Martensitic phase to the Austenitic phase. Conversely, on cooling of one of the SMA wires 14₁, 14₂, 14₃, 14₄ so that the stress in the SMA wire 14₁, 14₂, 14₃, 14₄ decreases, it expands under the force from opposing ones of the SMA wires 14₁, 14₂, 14₃, 14₄(and in some examples also biasing forces from one or more biasing means such as springs, armatures and so forth). This allows the second structure 13 to move in the opposite direction relative to the first structure 12.

The SMA wires 14₁, 14₂, 14₃, 14₄ may be made of any suitable SMA material, for example Nitinol or another titanium-alloy SMA material.

The drive signals for the SMA wires 14₁, 14₂, 14₃, 14₄ are generated and supplied by the control circuit implemented in the IC 7. For example, if the first structure 12 is fixed to (or part of) the support structure 3 and the second structure 13 is fixed to (or part or) the lens assembly 4, then the drive signals are generated by the control circuit in response to output signals of the gyroscope sensor (not shown) so as to drive movement of the lens assembly 4 to stabilise an image focused by the lens assembly 4 on the image sensor 6, thereby providing OIS. The drive signals may be generated using a resistance feedback control technique, for example as described in WO 2014/076463 A1.

Referring also to Figure 4, an example of a "flat" SMA actuator assembly 15 implementing the first drive arrangement 11 is shown.

In the flat actuator assembly 15 the first structure 12 takes the form of a flat, annular plate 16 having a rectangular outer perimeter (or "outer edge") and a circular inner perimeter (or "inner edge"), whilst the second structure 13 takes the form of a flat, thin annular sheet 17 with a rectangular outer perimeter and a circular inner perimeter. The first structure 12 in the form of the plate 16 is supported on a base 5 in the form of a rectangular plate. The four SMA wires 14₁, 14₂, 14₃, 14₄ are each attached at one end to respective first crimps 18₁, 18₂, 18₃, 18₄ (also referred to as "static" crimps) which are fixedly attached to (or formed as part of) the first structure 12, 16. The other end of each SMA wire 14₁, 14₂, 14₃, 14₄ is attached to a respective second crimp 19₁, 19₂, 19₃, 19₄ (also referred to as "moving" crimps) which is fixedly attached to (or formed as part of) the second structure 13, 17.

The plate 16 and the sheet 17 may each take the form of respective patterned sheets of metal, e.g., etched or machined stainless steel, and may be coated with an electrically-insulating dielectric material. The plate 16 and the sheet 17 are each provided with a respective central aperture aligned with the optical axis O allowing the passage of light from a lens assembly 4 mounted to the sheet 17 to an image sensor 6 supported on the base 5 (not shown in Figure 4 - see Figure 1).

The four SMA wires 14₁, 14₂, 14₃, 14₄ may be perpendicular to the optical axis O or inclined at a small angle to a plane perpendicular to the optical axis O. Generally, in a set, the four SMA wires 14₁, 14₂, 14₃, 14₄ are non-collinear.

The flat actuator assembly 15 includes a number of plain bearings (not shown in Figure 4) spaced around the optical axis O to bear the second structure 13, 17 on the first structure 12, 16. Preferably, at least three bearings are used in order to assist in providing stable support, although in general, a different number of bearings may be used. Each plain bearing (not shown in Figure 4) may take the form of a bearing member in the form of cylinder, and may be attached to, or formed as part of, the first structure 12. The plain bearings (not shown in Figure 4) may be made from a suitable metal or alloy such as phosphor bronze or stainless steel with a diamond-like carbon coating. The plain bearings (not shown in Figure 4) may be made from, or may include an upper layer coating of, a polymer, such as Polyoxymethylene (POM, Acetal), Polytetrafluoroethylene (PTFE) or PTFE-impregnated POM.

The flat actuator assembly 15 will generally also include biasing means (not shown) such as one or more springs or flexure arms arranged and configured to maintain the first and second structures 12, 13 in contact (via the plain bearings)and/or to urge the first and second structures 12, 13 towards a neutral (for example central) relative position when the SMA wires 14₁, 14₂, 14₃, 14₄ are not powered.

Details relevant to manufacturing actuator assemblies similar to the flat actuator assembly 15 can be found in WO 2016/189314 A1.

Although not shown in Figure 4, the flat actuator assembly 15 may be provided with end stops to provide limits on lateral movement of the second structure 13 relative to the first structure 12. In this way, the SMA wires 14₁, 14₂, 14₃, 14₄ can be protected from overextension resulting from, for example, impacts to which a device (not shown) incorporating the flat actuator assembly 15 may be subjected (for example being dropped).

The first drive arrangement 11 can drive translations Tx, Ty along first and/or second axes x, y and rotations Rz about an axis parallel to the third axis z (which is substantially parallel to the optical axis O). However, in order to provide translation Tz parallel to the third axis z, the first drive arrangement 11 must be combined with at least one bearing capable of converting torque applied about the optical axis O into a combination of a rotation Rz and translation Tz (a helical movement).

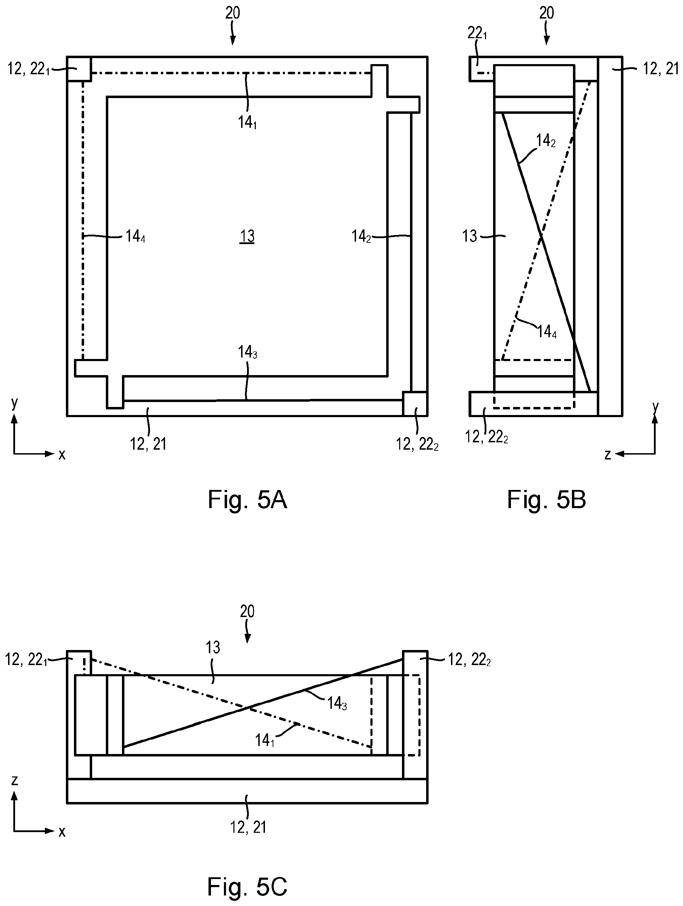

Referring also to Figures 5A to 5C, a second type of drive arrangement 20 which may be included in SMA actuator assemblies 2 is shown schematically.

The second drive arrangement 20 is similar to the first drive arrangement 11 except that the first structure 12 includes a base 21 and a pair of first and second upstanding pillars 22₁, 22₂, and that the SMA wires 14₁, 14₂, 14₃, 14₄ are not substantially confined to a plane perpendicular to the third axis z.

Figure 5A shows the second drive arrangement 20 viewed from above, along a direction parallel to the third axis z.

Figure 5B shows the second drive arrangement 20 viewed from the side, along a direction parallel to the first axis x. Note that the fourth SMA wire 14₄ has been superimposed on Figure 5B for visual purposes, even though the fourth SMA wire 14₄ would be largely obscured behind the second structure 13.

Figure 5C shows the second drive arrangement 20 viewed from the side, along a direction parallel to the second axis y. Note that the first SMA wire 14₁ has been superimposed on Figure 5B for visual purposes, even though the first SMA wire 14₁ would be largely obscured behind the second structure 13.

The base 21 extends beyond the edges of the second structure 13 when viewed along the third axis (Figure 5A), and in this example is rectangular (or square). The first pillar 22₁ is upstanding from a first corner of the base 21, and the second pillar 22₂ is upstanding from a second corner, diagonally opposite across the second structure 13.

The first SMA wire 14₁ connects from a lower portion (lower along the z axis) of the second structure 13 to an upper portion (higher along the z axis) of the first pillar 22₁. The second SMA wire 14₂ connects from an upper portion of the second structure 13 to a lower portion of the second pillar 22₂. The third SMA wire 14₃ connects from a lower portion of the second structure 13 to an upper portion of the second pillar 22₂. The fourth SMA wire 14₂ connects from an upper portion of the second structure 13 to a lower portion of the first pillar 22₁.

In this way, the first SMA wire 14₁ opposes the third SMA wire 14₃ in a direction parallel to the first axis x, the second SMA wire 14₂ opposes the fourth SMA wire 14₄ in a direction parallel to the second axis y, and the first and third SMA wires 14₁, 14₃ oppose the second and fourth SMA wires 14₂, 14₄ in a direction parallel to the third axis z.

In this way, the second drive arrangement 20, using four angled (non-coplanar) SMA wires 14₁, 14₂, 14₃, 14₄, may provide drive corresponding to Tx, Ty, Tz, Rx, Ry, Rz motions. The motions are not fully independent degrees of freedom, and in general translations will be linked to rotations, for example [Tx, Rx], [Ty, Ry] and [Tz, Rz], with the specific couplings depending on the angles of the SMA wires 14₁, 14₂, 14₃, 14₄.

The SMA wires 14₁, 14₂, 14₃, 14₄ are preferably inclined at an angle of between 10 and 25° relative to a plane perpendicular to the primary axis z.

Either or both of the first structure 12, 21 and the second structure 13 may include central apertures to permit light from a lens assembly 4 to form an image on an image sensor 6.

One of more of the motions driven by the first or second drive arrangements 11, 20 may be fully or partly constrained by coupling one or more bearings between the first and second structures 12, 13.

### Bearings

In general, a SMA actuator 2 according to this specification will include at least one of the first and second drive arrangements 11, 20 and also an arrangement of one or more mechanical bearings (also referred to as a "bearing arrangement") serving to support, constrain and/or convert the movements generated by the first or second drive arrangement 11, 20.

### -Two-bar link bearing-

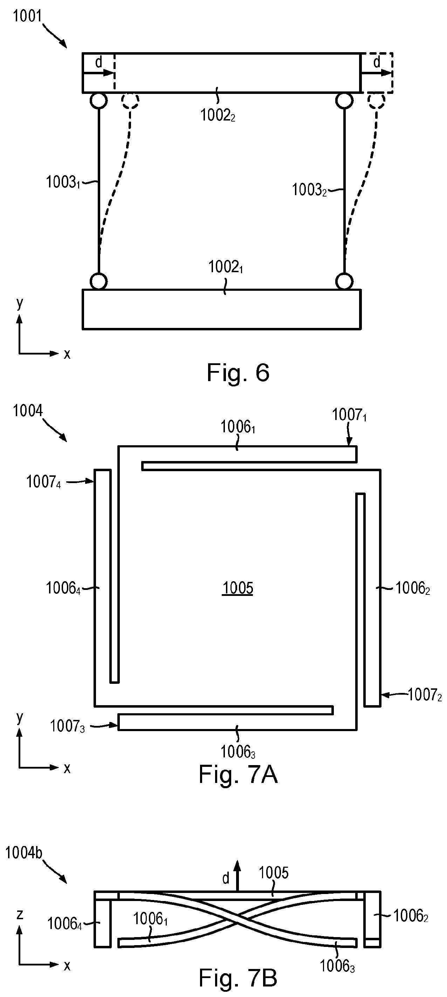

Referring also to Figure 6, a two-bar link bearing 1001 is shown.

The two-bar link bearing 1001 includes first and second rigid portions 1002₁, 1002₂ connected by first and second beam portions 1003₁, 1003₂ (also referred to as flexures). The rigid portions 1002₁, 1002₂ are each elongated in a direction parallel to the first axis x, and are spaced apart from one another in a direction parallel to the second axis y. The beam portions 1003₁, 1003₂ are each elongated in a direction parallel to the second axis y, and are spaced apart from one another in a direction parallel to the first axis x. The beam portions 1003₁, 1003₂ are shown as being perpendicular to the rigid portions 1002₁, 1002₂, however this is not essential and any angle will work provided that the beam portions 1003₁, 1003₂ are parallel to one another. The beam portions 1003₁, 1003₂ are unable to rotate about the joints with the rigid portions 1002₁, 1002₂, for example the connections are not pin-jointed or similar.

The relative flexural rigidities of the beam portions 1003₁, 1003₂ and the rigid portions 1002₁, 1002₂ are selected (primarily using the dimensions and shapes of cross-sections) so that if the first rigid portion 1002₁ is clamped, the second rigid portion 1002₂ may move relative to the first rigid portion 1002₁ via bending of the beam portions 1003₁, 1003₂ in the x-y and/or x-z planes. In this way, the two-bar link 1001 is able to provide for relative movements Tx, Tz, Rx and/or Ry for relative motion between the first and second rigid portions 1002₁, 1002₂. A deformed state in which the second rigid portion 1002₂ is displaced by a distance d parallel to the first axis is also shown in Figure 6 using dashed lines. The two-bar link bearing 1001 may be rotated 90 degrees to provide movement Ty parallel to the second axis y instead of Tx.

The relative resistance to bending in x-y versus y-z planes may be controlled by using the cross-sectional shape of the beam portions 1003₁, 1003₂ to select relative flexural rigidities.

### - Simple flexure -

Referring also to Figure 7A, a two-by-two parallel bar link bearing 1004 (also referred to as a simple flexure) is shown.

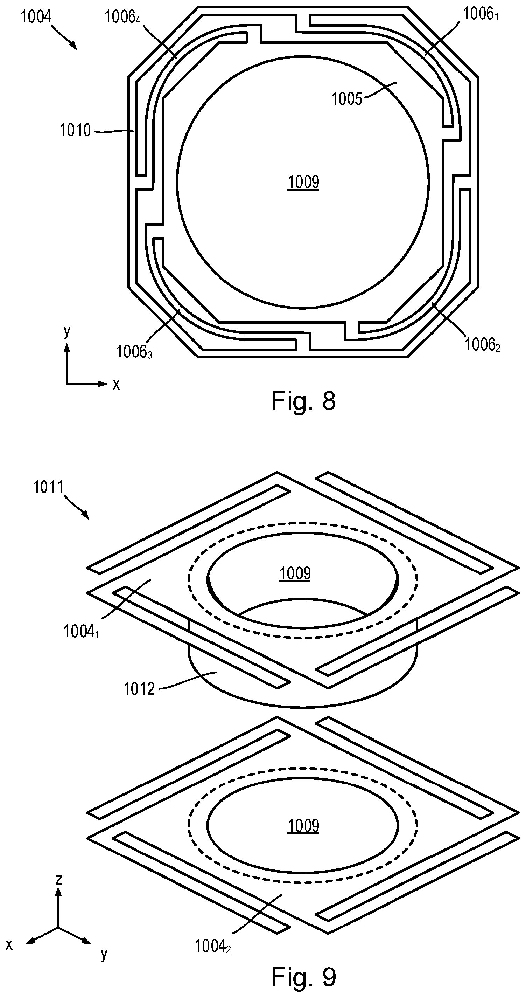

The simple flexure 1004 includes a central portion 1005 and two pairs of beam portions (or flexures) 1006₁, 1006₂, 1006₃, 1006₄. Each beam portion (or flexure) 1006₁, 1006₂, 1006₃, 1006₄ is rigidly connected to the central portion 1005 at one end, and has a second, free end 1007₁, 1007₂, 1001₃, 1007₄. In some examples the central portion 1005 may also have a central aperture 1009 (Figure 8). The first and third beam portions (flexures) 1006₁, 1006₃ are elongated in a direction parallel to the first axis x, and are able to deform, for example, by beam bending in the x-z plane. Similarly, the second and fourth beam portions (flexures) 1006₂, 1006₄ are elongated in a direction parallel to the second axis y, and are able to deform, for example, by beam bending in the y-z plane. Deflection of beam portions (or flexures) 1006₁, 1006₂, 1006₃, 1006₄ laterally (perpendicular to the third axis z) is constrained by the connection of all the beam portions (or flexures) 1006₁, 1006₂, 1006₃, 1006₄ to the central portion 1005 and/or by the cross-sectional shapes of the beam portions 1006₁, 1006₂, 1006₃, 1006₄.

In this way, if the free ends 1007 are clamped, the simple flexure 1004 is able to provide for relative movements Tz, Rx and/or Ry between the central portion 1005 and the clamped free ends 1007.

Referring also to Figure 7B, a deformed state 1004b of the simple flexure of Figure 7A is shown in which the central portion 1005 is displaced by a distance d parallel to the third axis z.

Referring also to Figure 8, a second simple flexure ("tiltable z-flexure") 1008 is shown.

The second simple flexure 1008 is the same as the simple flexure 1004, except that the central portion 1005 includes a central aperture 1009, that the ends of the beam portions 1006₁, 1006₂, 1006₃, 1006₄ not connected to the central portion 1005 are connected to an outer annulus 1010, and that the beam portions 1006₁, 1006₂, 1006₃, 1006₄ are curved instead of straight. The second simple flexure 1008 functions in substantially the same way as the simple flexure 1004. In particular, if the outer annulus is clamped, then the central portion 1005 may move in Tz, Rx and/or Ry.

The presence or absence of a central aperture 1009 in the second simple flexure 1008 or the simple flexure 1004 may depend on the position within a device, for example the camera 1. A simple flexure 1004, 1008 located below the image sensor 6 will not generally require a central aperture 1009, whereas a simple flexure 1004, 1008 located above the image sensor 6 will generally require a central aperture 1009.

### - Z-flexure -

Referring also to Figure 9, a z-flexure 1011 is shown.

The z-flexure includes a pair of simple flexures 1004₁, 1004₂ disposed perpendicular to the third axis z (when not deformed), and spaced apart in a direction parallel to the third axis z by a rigid structure 1012 sandwiched between the pair of simple flexures 1004₁, 1004₂. The simple flexures 1004₁, 1004₂ are fixed to opposed faces of the rigid structure 1012. The simple flexures 1004₁, 1004₂ each include a central aperture 1009. The illustration in Figure 9 shows the rigid structure 1012 fixed to one of the simple flexures 1004₁ and detached from the other simple flexure 1004₂ for visual purposes, though in use both simple flexures 1004₁, 1004₂ are fixed to the rigid structure 1012. Dashed lines in Figure 9 illustrate the projected outline of the rigid structure 1012.

In this way, each individual beam portion 1006 of each simple flexure 1004₁, 1004₂ may deflect. However, the separation of the simple flexures 1004₁, 1004₂ parallel to the third axis z and the fixed connection via the rigid structure 1012 constrains all movements Tz, Rx, Ry except movement Tz parallel to the third axis z.

In this example the rigid structure 1012 is a hollow cylinder having an inner diameter equal to the diameter of the central apertures 1009. However, the rigid structure 1012 may have any shape suitable for spacing the simple flexures apart parallel to the third direction z and compatible with an intended application of an actuator.

### - Pivot bearing -

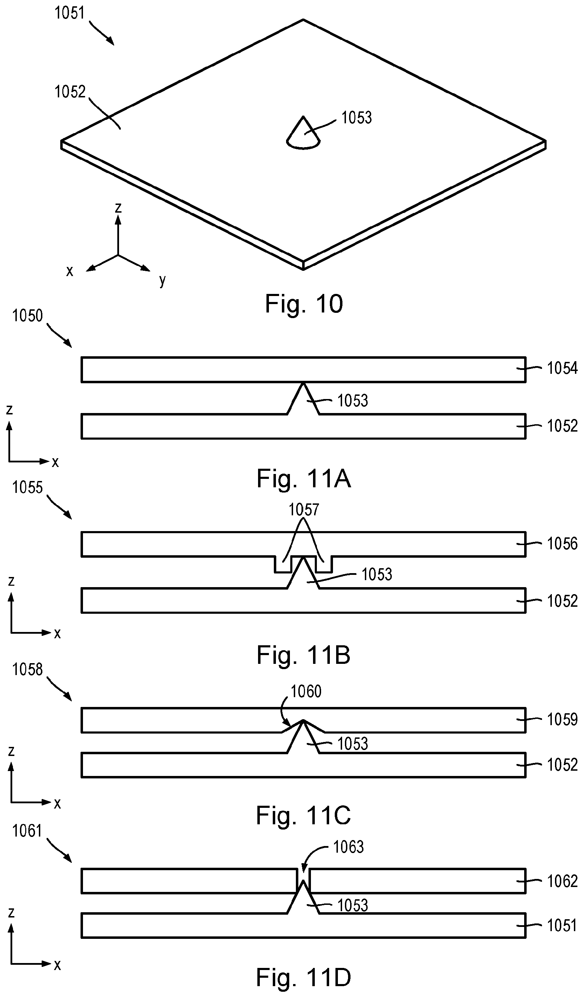

Referring also to Figures 10 and 11A, a first pivot bearing 1050 is shown.

Figure 10 shows a projection view of a first plate 1051 of the first pivot bearing 1050, and Figure 11A shows a side view of the first pivot bearing 1050.

The first plate 1051 includes a rectangular base plate 1052 extending parallel to first and second axes x, y from which a conical protrusion 1053 is upstanding in a direction parallel to the third axis z. The conical protrusion 1053 is illustrated as being central to the base plate 1052, but in practice this is not necessary and the conical protrusion 1053 is placed wherever the origin of pivoting is required for a particular application. The first pivot bearing 1050 is completed by a second plate 1054 contacting the conical protrusion 1053. Biasing means (not shown) urge the first and second plates 1051, 1054 together to maintain contact between the conical protrusion 1053 and the second plate 1054. The second plate 1054 may slide relative to the conical protrusion 1053 parallel to the first and/or second axes x, y, and may rotate (tilt) about any axis x, y, z with an origin provided by a point of the conical protrusion.

In this way, the relative motions between the first plate 1051 and the second plate 1054 correspond to Tx, Ty, Rx, Ry and Rz, whilst constraining movement Tz parallel to the third axis z.

A conical protrusion 1053 is not essential, and any shape of protrusion suitable to provide a pivot point may be used instead.

Referring also to Figure 11B, a side view of a second pivot bearing 1055 is shown.

The second pivot bearing 1055 includes the first plate 1051, but replaces the second plate 1054 with a third plate 1056. The third plate 1056 includes an annular protrusion 1057 which defines a recess that receives the point of the conical protrusion 1053. The annular protrusion 1057 constrains lateral sliding of the third plate 1056 relative to the first plate 1051. In this way, the relative motions between the first plate 1051 and the third plate 1056 correspond to Rx, Ry and Rz, whilst constraining movements Tx, Ty and Tz.

Referring also to Figure 11C, a side view of a third pivot bearing 1058 is shown.

The third pivot bearing 1058 includes the first plate 1051, but replaces the second plate 1054 with a fourth plate 1059. The fourth plate 1059 includes a conical indentation 1060 which defines a recess that receives the point of the conical protrusion 1053. The conical indentation 1060 constrains lateral sliding of the fourth plate 1059 relative to the first plate 1051. In this way, the relative motions between the first plate 1051 and the fourth plate 1059 correspond to Rx, Ry and Rz DOF, whilst constraining movements Tx, Ty and Tz.

Referring also to Figure 11D, a side view of a fourth pivot bearing 1061 is shown.

The fourth pivot bearing 1061 includes the first plate 1051, but replaces the second plate 1054 with a fifth plate 1062. The fifth plate 1062 includes through-hole 1063 that receives the point of the conical protrusion 1053. The through-hole 1063 constrains lateral sliding of the fifth plate 1061 relative to the first plate 1051. In this way, the relative motions between the first plate 1051 and the fifth plate 1062 correspond to Rx, Ry and Rz, whilst constraining movements Tx, Ty and Tz. The fifth plate 1062 may be relatively simpler to fabricate compared to the third or fourth plates 1056, 1059.

The pivot bearings 1050, 1055, 1058, 1061 may be inverted. Thus, the conical (or other shaped) protrusion 1053 may depend from the (upper) plate 1054, 1056, 1059, 1062 and, if present, the facing protrusion 1057, indentation 160 or recess 1063 may be provided in the (lower) plate 1051, 1052.

### - Planar bearing -

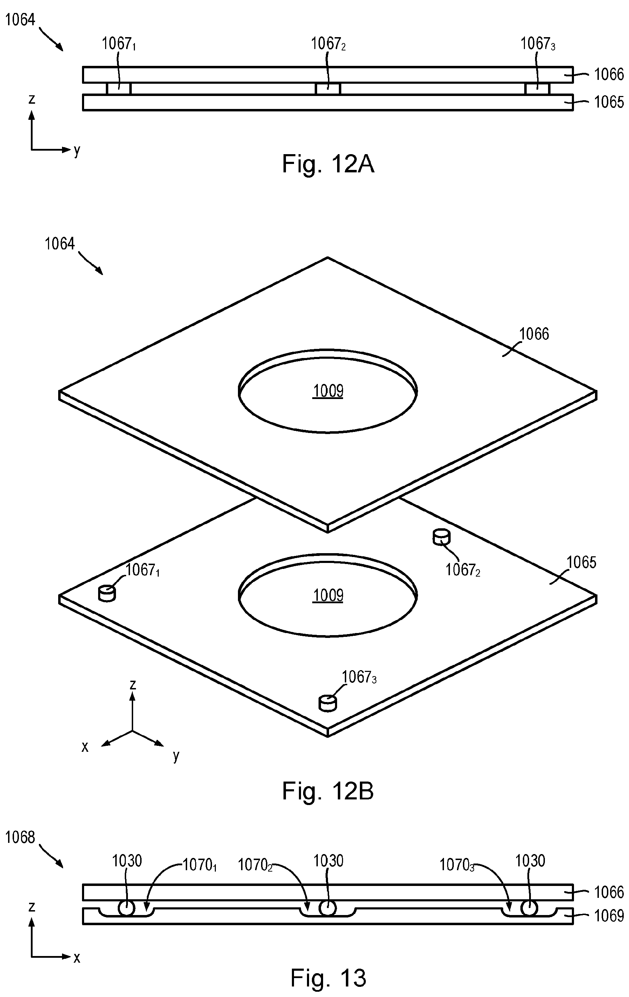

Referring also to Figures 12A and 12B, a first planar bearing 1064 (also referred to as a three-point bearing) is shown.

Figure 12A is a side view and Figure 12B is an exploded projection view.

The first planar bearing 1064 includes a first plate 1065 which slides in contact with a second plate 1066. The first plate 1065 supports at least three cylindrical protrusions 1067 including at least first 1067₁, second 1067₂ and third 1067₃ cylindrical protrusions which are not co-linear, for example arranged at the points of a triangle. The second plate 1066 is urged into contact with the flat surfaces of the cylindrical protrusions 1067 by biasing means (not shown in Figures 12A and 12B), and is free to slide in a plane parallel to the first and second axes x, y, and to rotate about an axis parallel to the third axis z. In this way, the relative motions between the first plate 1065 and the second plate 1066 correspond to Tx, Ty and/or Rz. Unless a biasing force urging the plates 1065, 1066 together is overcome, Tz, Rx and Ry movements are constrained.

In the example shown in Figures 12A and 12B, both plates 1065, 1066 take the form of an annulus having a rectangular outer perimeter and a circular inner perimeter defining a central aperture 1009. However, the shape of the plates 1065, 1066 is not relevant to the function of the first planar bearing 1064, and any shapes of plate may be used instead. Although three cylindrical protrusions 1067₁, 1067₂, 1067₃ are shown in Figures 12A and 12B, in general any number of cylindrical protrusions greater than or equal to three may be used.

Referring also to Figure 13, a second planar bearing 1068 is shown.

The second planar bearing 1068 is the same as the first planar bearing 1064, except that the cylindrical protrusions 67 are replaced by ball bearings 1030₁, 1030₂, 1030₃. The first plate 1065 may also be replaced with a third plate 1069 including recesses 1070₁, 1070₂, 1070₃, for example circular indents, for receiving corresponding ball bearings 1030₁, 1030₂, 1030₃. The second planar bearing 1068 functions in the same way as the first planar bearing 1064, except that the second planar bearing 1068 is a rolling bearing instead of a plain bearing.

### - Gimbal -

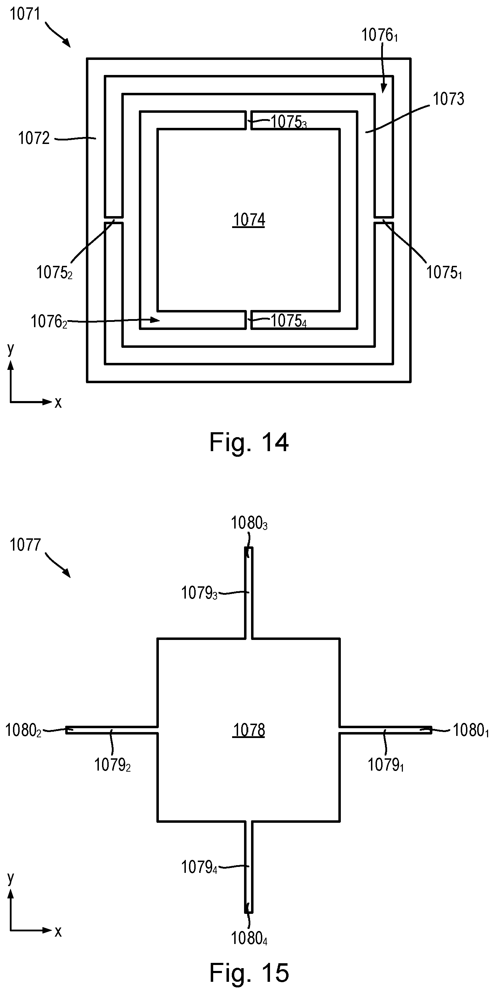

Referring also to Figure 14, a first gimbal bearing 1071 is shown.

The first gimbal bearing 1071 includes an outer frame 1072, an inner frame 1073 and a central portion 1074. The outer frame 1072 and the inner frame 1073 are connected by a first and second torsion beam portions 1075₁, 1075₂ which are positioned space apart parallel to the first axis x and on opposite sides of the inner frame 1073. The first and second torsion beam portions 1075₁, 1075₂ are co-linear with one another and with a central point of the central portion 1074. With the exception of the torsion beam portions 1075₁, 1075₂, the inner frame 1073 is separated from the outer frame 1072 by a first gap 1076₁.

The inner frame 1073 and the central portion 1074 are connected by third and fourth torsion beam portions 1075₃, 1075₄ which are positioned space apart parallel to the second axis y and on opposite sides of the central portion 1074. The third and fourth torsion beam portions 1075₃, 1075₄ are co-linear with one another and with a central point of the central portion 1074. With the exception of the torsion beam portions 1075₃, 1075₄, the inner frame 1073 is separated from the central portion by a second gap 1076₂.

If the outer frame 1072 is clamped, then the central portion 1074 may rotate Rx about the first axis x by torsion of the first and second torsion beam portions 1075₁, 1075₂, and/or rotate Ry about the second axis y by torsion of the third and fourth torsion beam portions 1075₃, 1075₄. In this way, the relative motions between the central portion 1074 and the outer frame 1072 correspond to Rx and Ry whilst other movements Tx, Ty, Tz and Rz are constrained.

The width and through-thickness of torsion beam portions 1075 should be small enough to enable sufficient (i.e. designed for) rotation by torsion in response to forces applicable using an SMA drive arrangement 11, 20.

Referring also to Figure 15, a second gimbal bearing 1077 is shown.

The second gimbal bearing 1077 includes a central portion 1078 connected to four elongated torsion beam portions 1079₁, 1079₂, 1079₃, 1079₄. The first and second elongated torsion beam portions 1079₁, 1079₂ are spaced apart parallel to the first direction x and on opposite sides of the central portion 1078. The first and second elongated torsion beam portions 1079₁, 1079₂ are co-linear with one another and a middle point of the central portion 1078. The third and fourth elongated torsion beam portions 1079₃, 1079₄ are spaced apart parallel to the second direction y and on opposite sides of the central portion 1078. The third and fourth elongated torsion beam portions 1079₃, 1079₄ are co-linear with one another and a middle point of the central portion 1078.

If the free ends 1080 of the torsion beam portions 1079 are clamped, then the central portion 1078 may rotate Rx about the first axis x by torsion of the first and second torsion beam portions 1079₁, 1079₂ and bending of the third and fourth torsion beam portions 1079₃, 1079₄ (for example one deflects up the other down). Additionally or alternatively, the central portion 1078 may rotate Ry about the second axis y by torsion of the third and fourth torsion beam portions 1079₃, 1079₄ and bending of the first and second torsion beam portions 1079₁, 1079₂.

### - Z-translation bearing -

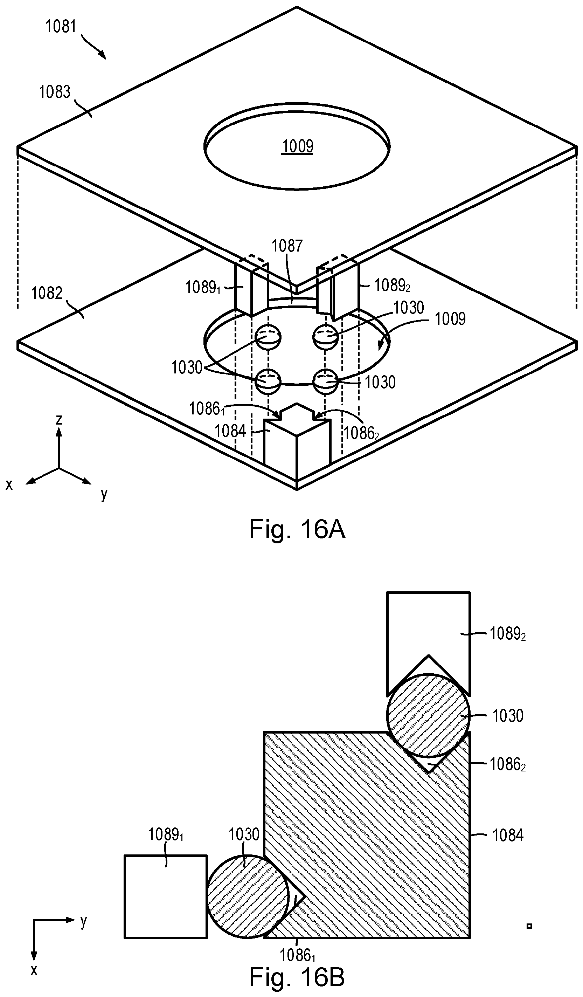

Referring also to Figures 16A and 16B, a z-translation bearing 1081 is shown.

Figure 16A shows an exploded projection view and Figure 16B shows a section through a block 1084 of the assembled z-translation bearing 1081.

The z-translation bearing 1081 includes a first plate 1082 and a second plate 1083. Both plates 1082, 1083 take the form of an annulus having a rectangular outer perimeter and a circular inner perimeter defining a central aperture 1009. A block 1084 extends perpendicular to a surface of the first plate 1082. As drawn in Figure 16A, the first and second plates 1082, 1083 are parallel to the first and second axes x, y and the block 1084 extends in a direction parallel to the third axis z. The block 1084 is generally cuboidal first and second faces of the block 1084 including V-shaped channels 1086₁, 1086₂ oriented substantially parallel with the third axis z.

A pair of ball bearings 1030 is received into each V-shaped channel 1086₁, 1086₂, and the ball bearings 1030 are retained in the V-shaped channels 1086₁, 1086₂ by respective cuboidal protrusions 1089₁, 1089₂ which extend from the second plate 1083. Biasing means (not shown) for loading the bearings and ball-retaining means (not shown) are also generally included.

In this way, permitted relative motions between the first plate 1082 and the second plate 1083 correspond to Tz, whilst all other movements Tx, Ty, Rx, Ry, Rz are constrained.

Although a single block 1084 and corresponding protrusions 1087, 1089₁, 1089₂ are shown in Figures 16A and 16B, in some example two of more blocks 1084 may be used in conjunction with corresponding sets of corresponding protrusions 1087, 1089₁, 1089₂.

### - Helical flexure bearing -

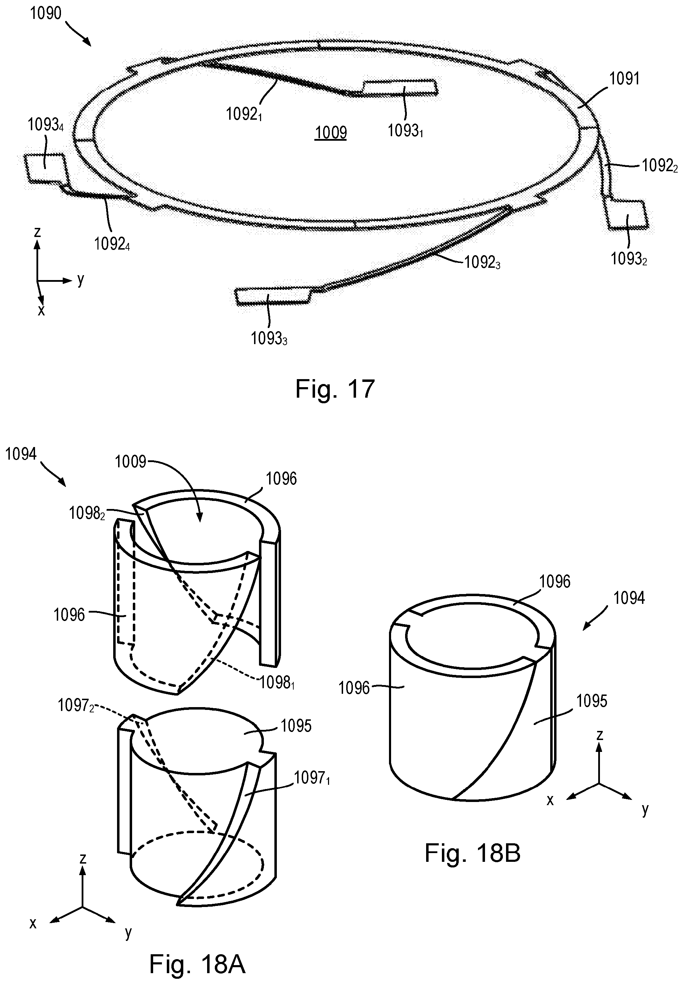

Referring also to Figure 17, an example of a helical flexure bearing 1090 is shown.

The helical flexure bearing 1090 includes a circular annulus 1091 having a central aperture 1009 and connected to three, four or more, preferably five or more, helical beam portions 1092. In the example shown in Figure 17, there are four helical beam portions 1092₁, 1092₂, 1092₃, 1092₄. At the end not connected to the circular annulus, each helical beam portion 1092₁, 1092₂, 1092₃, 1092₄ is connected to a pad 1093₁, 1093₂, 1093₃, 1093₄, for example for connection to a layer or structure below (in relation to the third axis z as drawn) the circular annulus 1091.

Each helical beam portion 1092₁, 1092₂, 1092₃, 1092₄ is approximately tangential to the circular annulus 1091 (in the same sense) and its span includes both a first component parallel to the plane containing the first and second axes x, y and a second component parallel to the third axis z. If the pads 1093₁, 1093₂, 1093₃, 1093₄ are clamped and a force is exerted upwards (positive z direction) on the circular annulus 1091, then in response the helical beam portions 1092₁, 1092₂, 1092₃, 1092₄ will deflect in the direction of that force. However, in doing so, the ends connected to the circular annulus are also deflected closer the respective pad 1093₁, 1093₂, 1093₃, 1093₄, causing the circular annulus 1091 to rotate clockwise about an axis parallel to the third axis z. Conversely, a force exerted downwards (negative z direction) on the circular annulus 1091 will result in both a downwards movement of the circular annulus 1091 and also an anti-clockwise (counter-clockwise) rotation of the circular annulus 1091.

In this way, the helical flexure bearing 1090 acts to convert a rotation about the third axis z into a relative displacement parallel to the third axis z and *vice versa.* However, the movements are not independent of one another, and relative to clamped pads 1093₁, 1093₂, 1093₃, 1093₄ the circular annulus 1091 is constrained to move along an approximately helical path. Since this does not reflect independent degrees of freedom, the motion will be denoted as [Tz, Rz] to highlight the relationship between translation Tz parallel to the third axis z and rotation Rz about the third axis z for this bearing type.

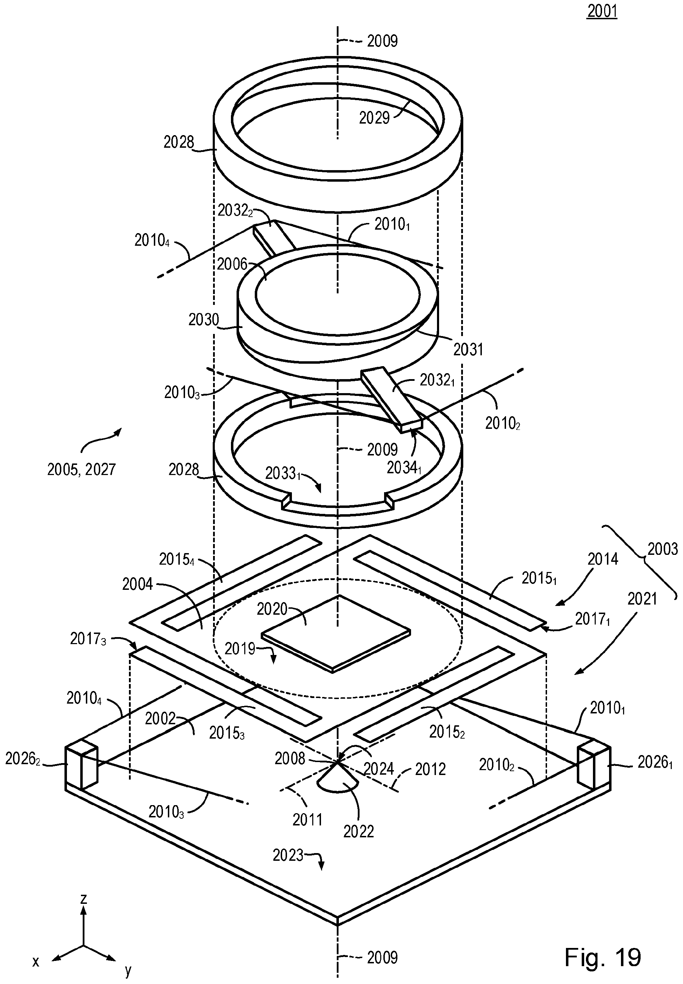

Although the helical beam portions 1092₁, 1092₂, 1092₃, 1092₄ shown in Figure 17 are curving, in other examples of helical flexure bearings 1090 the helical beam portions 1091 may be straight. Further examples of helical flexure bearings 1090 are described in WO 2019/243849 A1, the contents of which are incorporated herein by reference in their entirety. Figures 19 to 22 of WO 2019/243849 A1 and the accompanying description on page 22, line 23 to page 23, line 24 are particularly relevant to helical flexure bearings 1090. Additional examples of implementing helical flexure bearings 1090 are also shown and described hereinafter.

### - Helical bearing -

Referring also to Figures 18A and 18B, an example of a helical bearing 1094 is shown.

Figure 18A is an exploded projection view and Figure 18B is a projection of the assembled helical bearing 1094. Occluded features are shown using dashed lines in Figure 18A.

The helical bearing 1094 includes a first structure 1095 and a second structure 1096 configured to fit together for sliding motion between helical surfaces 1097₁, 1097₂ of the first structure 1095 and helical surfaces 1098₁, 1098₂ of the second structure 1096. Biasing means (not shown) urge the first and second structures 1095, 1096 together to maintain the pairs of helical surfaces 1097₁ and 1098₁, 1097₂, 1098₂ in contact. In this way, the relative motions between the first and second structures 1095, 1096 are constrained to a helical path [Tz, Rz].

The example shown in Figures 18A and 18B prioritises visual clarity of the functioning of a helical bearing over practicality of implementation, and specific embodiments described hereinafter include additional examples more suited to incorporation into a device such as a camera 1. In particular, although the helical surfaces 1097, 1098 may be curved to follow a helical path as shown in Figures 18A and 18B, in other examples the helical surfaces 1097, 1098 may be substantially planar, for example ramps. Although the helical bearing 1094 shown in Figures 18A and 18B is a plain bearing, other helical bearings in the form of rolling bearings are also possible. Further examples of helical bearings 1094 may be found in WO 2019/243849 A1. In particular, see Figures 1 to 18 of WO 2019/243849 A1 and the corresponding description on page 7, line 10 to page 22, line 21.

Although illustrated and described in particular orientations with respect to a set of right-handed Cartesian axes x, y, z for reference, any of the bearings described hereinbefore may be oriented at an arbitrary angle.

The bearings described hereinbefore may be formed of any suitable materials and using any suitable fabrication methods.

For example, plate- or sheet-like components may be fabricated from metal sheets, for example stainless steel, with patterning provided by chemical or laser etching. Milling or stamping could be used provided that this does not introduce unacceptably residual strains causing distortion of parts. After patterning, such parts may be bent or pre-deformed as needed. Complex three-dimensional parts may be built up by attaching parts to plates, sheets or other parts, for example using adhesives, welding, brazing, soldering and so forth. Alternatively, complex three-dimensional parts may be formed by, for example, sintering or die-casting of metals, or by injection moulding of polymers. Any bearing surfaces may be formed from a polymer such as POM (Acetal), PTFE or PTFE-impregnated POM.

### First actuator assembly

Referring to Figures 19, 20, 21 and 22, a first actuator assembly 2001 is schematically shown.

The actuator assembly 2001 takes the form of a four-SMA wire actuator. The actuator assembly 2001 comprises a first part 2002, a first bearing arrangement 2003, a tiltable platform 2004, a second bearing arrangement 2005, a second part 2006 and a four-SMA wire drive system 2007.

The first bearing arrangement 2003 supports the platform 2004 on the first part 2002 of the actuator assembly 2001. The platform 2004 is tiltable about a pivot point 2008 which lies on the optical axis 2009 (or "primary axis") passing through the actuator assembly 2001.

The second bearing arrangement 2005 supports the second part 2006 of the actuator assembly 2001 on the platform 2004 such that the second part 2006 tilts with the platform 2004.

The drive system 2007 comprises a total of four shape memory alloy wires 2010₁, 2010₂, 2010₃, 2010₄ (herein also referred to as "lengths"). The four shape memory alloy wires 2010₁, 2010₂, 2010₃, 2010₄ mechanically connect (or "couple") the second part 2006 to the first part 2002 of the actuator assembly. The shape memory alloy wires 2010₁, 2010₂, 2010₃, 2010₄ are formed from copper-aluminium-nickel alloy, nickel-titanium alloy or other suitable shape memory alloy.

The shape memory alloy wires 2010₁, 2010₂, 2010₃, 2010₄ are substantially co-planar and is referred to as "a flat four-wire SMA wire arrangement". However, the shape memory alloy wires 2010₁, 2010₂, 2010₃, 2010₄ can be arranged so as not to be co-planar (in "an angled four-wire SMA wire arrangement").

### - First bearing arrangement 2003 -

The first bearing arrangement 2003 is configured to guide tilting of the platform 2004 about first and/or second axes 2011, 2012 (i.e., about the first axis 2011, about the second axis 2012 and combinations of tilt about the first and second axes 2011, 2012) and to constrain rotation of the platform 2004 about the primary axis 2008. The first and second axes 2013, 2014 are not parallel with respect to each other and are perpendicular to the primary axis 2009. In this example, the first and second axes 2011, 2012 are also perpendicular to each other. The first and second axes 2011, 2012 pass through the pivot point 2008.

The first bearing arrangement 2003 includes a simple flexure 2014 substantially as hereinbefore described with reference to Figures 7A and 7B.

The simple flexure 2014 includes two pairs of beam portions (hereinafter referred to as "flexures") 2015₁, 2015₂, 2015₃, 2015₄. Each flexure 2015₁, 2015₂, 2015₃, 2015₄ is rigidly connected to the platform 2004 at one end ("a first end"), and has a second, free end 2017₁, 2011₂, 2017₃, 2017₄ rigidly connected to the first part 2002.

The platform 2004 and the flexures 2015₁, 2015₂, 2015₃, 2015₄ are formed in a single-piece. For example, the platform 2004 and the flexures 2015₁, 2015₂, 2015₃, 2015₄ may be formed by etching or machining a sheet of metal or metal alloy, such as stainless steel.

The first and third flexures 2015₁, 2015₃ are elongated parallel to the first axis x, and are able to deform by beam bending in the x-z plane. Similarly, the second and fourth flexures 2015₂, 2015₄ are elongated parallel to the second axis y, and are able to deform by beam bending in the y-z plane. Deflection of the flexures 2015₁, 2015₂, 2015₃, 2015₄ laterally (perpendicular to the third axis z) is constrained by the connection of all the flexures 2015₁, 2015₂, 2015₃, 2015₄ to the platform 2004.

The platform 2004 is generally thin and flat, and has first and second opposite faces 2018, 2019. The first face 2018 faces the base 2002 and the second face 2019 faces away from the base 2002. The second face 2019 (hereinafter referred to as the "upper face") supports an image sensor 2020, such as CCD or CMOS device.

The first bearing arrangement 2003 includes a pivot bearing 2021 substantially the same as hereinbefore described with reference to Figures 10 and 11A to 11D .

The pivot bearing 2021 includes a member 2022 (or "protrusion") upstanding from an upper face 2023 of the first part 2002 of the actuator assembly which serves as a base for the pivot. In some examples, the pivot bearing 2021 may include a separate base which is supported by the first part 2002 of the actuator assembly.

The protrusion 2022 has a distal end 2024 which contacts the platform 2004, in particular, a point (or area) of contact on the first face 2018 (herein after referred to either as the "bottom face" or "underside") of the platform 2004. The distal end 2024 of the protrusion 2022 and contact point define the pivot point 2008.

The free ends 2017₁, 2017₂, 2017₃, 2017₄ of the flexures 2015₁, 2015₂, 2015₃, 2015₄ are attached to the upper face 2023 of the first part 2002 of the assembly 2001 or the pivot bearing 2021. This urges the first part 2002 of the assembly and the platform 2004 together to maintain contact between the protrusion 2022 and the platform 2004.

Anchoring members 2026₁, 2026₂ for the shape memory alloy wires 2010₁, 2010₂, 2010₃, 2010₄ are rigidly attached to the first part 2002. The anchoring members 2026₁, 2026₂ can take the form of posts or other structures upstanding from the first part 2002 of the actuator assembly 2001. In this example, two anchoring members 2026₁, 2026₂ are provided, located in opposite corners of the first part 2002. More than two anchoring members 2026₁, 2026₂, however, may be provided. Crimps (not shown) are used to attached the shape memory alloy wires 2010₁, 2010₂, 2010₃, 2010₄ the anchoring members 2026₁, 2026₂.

The first part 2002 of the actuator assembly is formed a metal or metal alloy, such as stainless steel.

### - Second bearing arrangement 2005 -

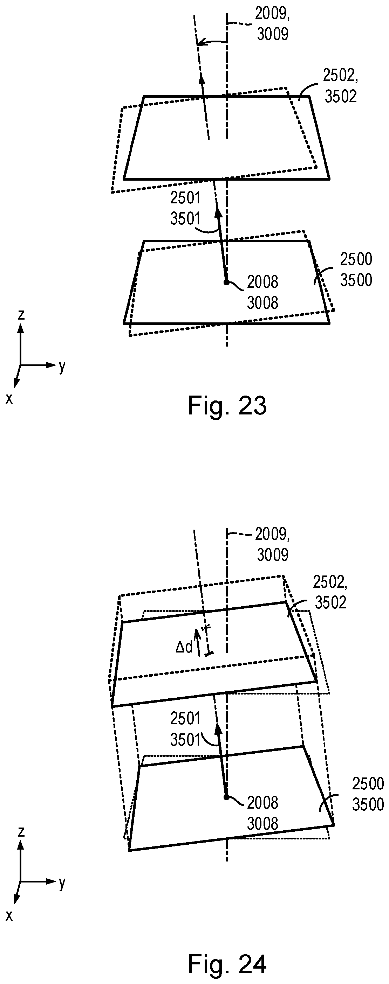

Referring also to Figures 23 and 24, the platform 2002 lies in a first plane 2500 which is tiltable and which has a normal 2501 (herein also referred to as "the axis of tilt" or "tilt axis") such that tilting the platform 2002 tilts the normal 2501 away from primary axis.

The second bearing arrangement 2005 is configured to constrain tilting of the second part 2006 with respect to the platform 2002, to constrain (i.e., to resist or even to prevent, or to discourage) lateral movement of the second part 2006 in a second plane 2502 parallel to the first plane, and to guide axial movement of the second part 2006 along the normal 2501 relative to the platform 2002.

The second bearing arrangement 2005 is also configured to convert torque applied around the normal 2501 into movement of the second part 2006 along the normal 2501 relative to the platform 2004.

The second bearing arrangement 2005 comprises a helical bearing 2027 similar to that hereinbefore described.

The helical bearing 2027 comprises an outer cylinder 2028 having an inner screw thread 2029 and an inner cylinder 2030 (or "lens carriage") having an external screw thread 2031. The inner cylinder 2030 is threaded in the outer cylinder 2028. The outer cylinder 2028 is fixed on the platform 2004 such that the inner cylinder 2030 is moveable relative to the platform 2004.

The helical bearing 2027 further comprises first and second arms 2032₁, 2032₂ projecting outwardly from the inner cylinder 2030 beyond the outer cylinder or ring. The first and second arms 2032₁, 2032₂ project radially out from diametrically opposite sides of the cylinder 2030. The first and second arms 2032₁, 2032₂ and the inner cylinder 2030 are integrally formed and are made from metal or a metal alloy, such as stainless steel.

The outer cylinder 2028 include first and second circumferential sectoral slots 2033₁, 2033₂ through which the first and second arms 2032₁, 2032₂, respectively, pass.

The first and second arms 2032₁, 2032₂ having respective distal ends 2034₁, 2034₂ respectively. The second and third shape memory alloy wires 2010₂, 2010₃ are connected to the distal end 2034₁ of the first arm 2032₁ and the fourth and first shape memory alloy wires 2010₄, 2010₁ are connected to the distal end 2034₁ of the second arm 2032₁.

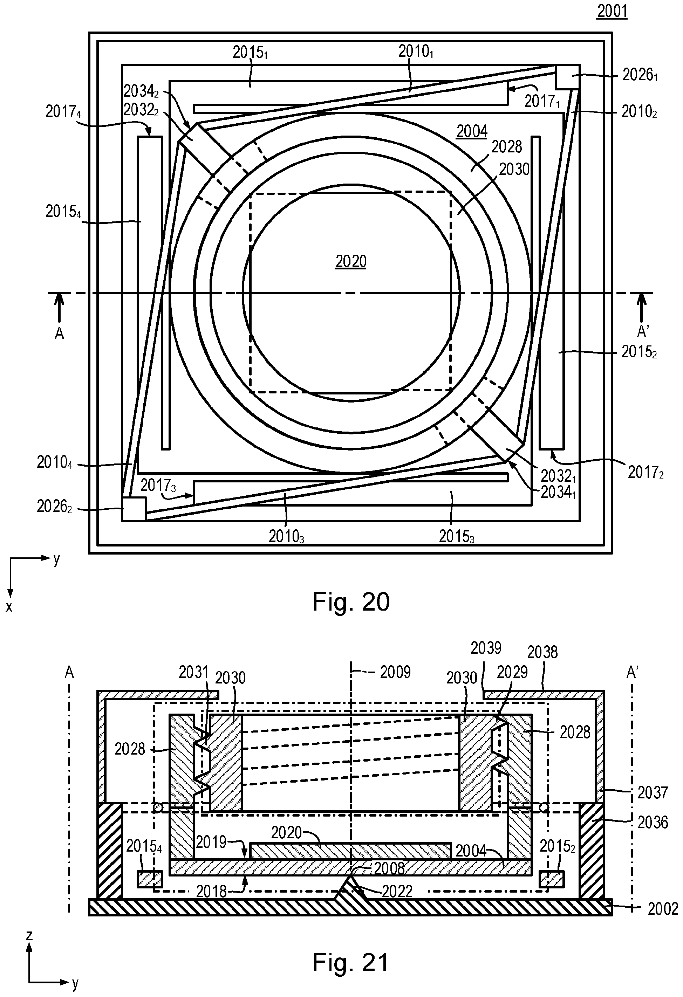

Referring in particular to Figure 21, the actuator assembly includes an enclosure 2035 (herein referred to as a "can"). The can 2035 can be formed in two parts including a lower circumferential wall 2036 upstanding from the first part 2002 of the actuator assembly and an upper cap 2037 which includes a front 2038 and a central aperture 2039.

### - Movement -

Referring again to Figures 19, 20, 21 and 22, the first actuator assembly 2001 is able to provide OIS by tilting the platform 2004 and second part 2006 together about the first and second axes 2011, 2012 and AF by moving the second part 2006 relative to the platform 2004 along the normal 2501 (Figure 24).

Different movements are caused by heating and cooling different combinations of the SMA wires 2010₁, 2010₂, 2010₃, 2010₄. As explained earlier, heating can be caused by driving a current through an SMA wire, which causes the SMA wire to contract.

A change in separation between the second part 2006 and the platform 2004 is brought about by increasing the power to, and hence contracting, two wires on opposite sides, for example, first and third wires 2010₁, 2010₃ while decreasing the power to, and hence allowing expansion of, the other two wires, namely second and fourth wires 2010₂, 2010₄. There is a change in torque about the normal which is resisted by the first bearing arrangement 2003 and converted into helical movement by the second bearing arrangement 2005.

A change in tilt of the platform 2004 about a diagonal (e.g., about the line Y = - X) is brought about by increasing the power to, and hence contracting, two adjacent wires, for example, fourth and first wires 2010₄, 2010₁ while decreasing the power to, and hence allowing expansion of, the other two wires, in this example, second and third wires 2010₂, 2010₃, thereby producing a force on the second part 2004, in this case, along the line Y = X.

Suitable tilts can be produced as a linear combination of changes in diagonal tilts.

Translational movement of second part 2006 and, thus, the lens arrangement (not shown), can result in rotational movement of the second part 2006 around the normal 2501 (Figure 24).

If the SMA wire arrangement is spaced vertically from the first bearing and the first and second bearings resist motion in the X/Y plane, then the translation from the SMA wire arrangement is converted into tilt by the first bearing. Rotation about the second axis (i.e., Ry) is added to the motion along the first axis (i.e., Tx) and rotation about the first axis (i.e., Rx) is added to the motion along the second axis (i.e., Ty).

### Variant of the first actuator assembly

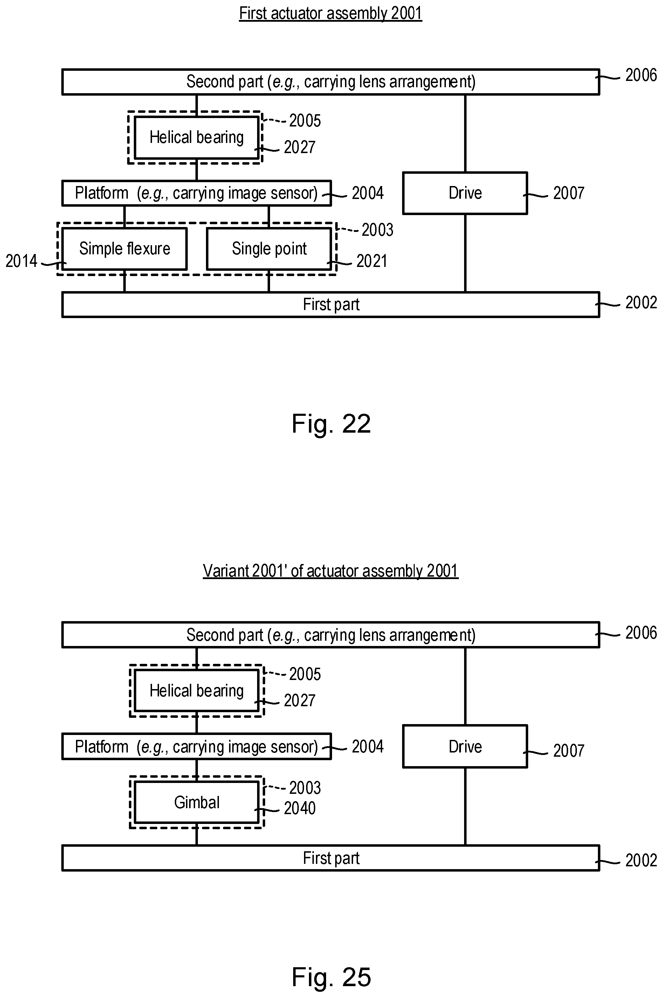

Referring to Figure 23, a variant 2001' of the first actuator assembly 2001 Figure 22) is schematically shown.

In the variant 2001', the first bearing arrangement 2003 takes the form of a gimbal 2040 similar to that described in relation to Figure 14.

The gimbal 2040 is suspended above the first part 2002 of the actuator assembly with the outer frame 1072 (Figure 14) fixed in relation to the first part 2002 and the central portion 1074 (Figure 14) serving as the platform 2004.

The gimbal 2040 is formed by etching or machining a sheet of metal or metal alloy, such as stainless steel.

### Second actuator assembly

Referring to Figures 24, 25 and 26, a second actuator assembly 3001 is schematically shown.

The actuator assembly 3001 takes the form of a four-SMA wire actuator. The actuator assembly 2001 comprises a first part 3002, a first bearing arrangement 3003, a tiltable platform 3004, a second bearing arrangement 3005, a second part 3006 and a four-SMA wire drive system 3007.

The first bearing arrangement 3003 supports the platform 3004 on the first part 3002 of the actuator assembly 3001. The platform 3004 is tiltable about a pivot point 3008 which lies on the optical axis 3009 (or "primary axis") passing through the actuator assembly 3001.

The second bearing arrangement 3005 supports the second part 3006 of the actuator assembly 3001 on the platform 3004 such that the second part 3006 tilts with the platform 3004.

The drive system 3007 comprises a total of four shape memory alloy wires 3010₁, 3010₂, 3010₃, 3010₄ (herein also referred to as "lengths"). The four shape memory alloy wires 3010₁, 3010₂, 3010₃, 3010₄ mechanically connect (or "couple") the second part 3006 to the first part 3002 of the actuator assembly. The shape memory alloy wires 3010₁, 3010₂, 3010₃, 3010₄ are formed from copper-aluminium-nickel alloy, nickel-titanium alloy or other suitable shape memory alloy.

The second actuator assembly 3001 is similar to the first actuator assembly 2001 (Figure 19) but differs mainly in two ways.

First, the shape memory wires 3010₁, 3010₂, 3010₃, 3010₄ are not substantially co-planar with first and second axes 3011, 3012 and are inclined in an arrangement referred to as "an angled four-wire SMA wire arrangement".

Secondly, a different bearing arrangement is used in second bearing arrangement 3005.

### - First bearing arrangement 3003 -

The first bearing arrangement 3003 is configured to guide tilting of the platform 3004 about first and/or second axes 3011, 3012 (i.e., about the first axis 3011, about the second axis 3012 and combinations of tilt about the first and second axes 3011, 3012) and to constrain rotation of the platform 3004 about the primary axis 3008. The first and second axes 3013, 3014 are not parallel with respect to each other and are perpendicular to the primary axis 3009. In this example, the first and second axes 3011, 3012 are also perpendicular to each other. The first and second axes 3011, 3012 pass through the pivot point 3008.

The first bearing arrangement 3003 includes a simple flexure 3014 substantially as hereinbefore described with reference to Figures 7A and 7B.

The simple flexure 3014 includes two pairs of beam portions (hereinafter referred to as "flexures") 3015₁, 3015₂, 3015₃, 3015₄. Each flexure 3015₁, 3015₂, 3015₃, 3015₄ is rigidly connected to the platform 3004 at one end ("a first end"), and has a second, free end 3017₁, 3017₂, 3017₃, 3017₄ rigidly connected to the first part 3002.

The platform 3004 and the flexures 3015₁, 3015₂, 3015₃, 3015₄ are formed in a single-piece. For example, the platform 3004 and the flexures 3015₁, 3015₂, 3015₃, 3015₄ may be formed by etching or machining a sheet of metal or metal alloy, such as stainless steel.

The first and third flexures 3015₁, 3015₃ are elongated parallel to the first axis x, and are able to deform by beam bending in the x-z plane. Similarly, the second and fourth flexures 3015₂, 3015₄ are elongated parallel to the second axis y, and are able to deform by beam bending in the y-z plane. Deflection of the flexures 3015₁, 3015₂, 3015₃, 3015₄ laterally (perpendicular to the third axis z) is constrained by the connection of all the flexures 3015₁, 3015₂, 3015₃, 3015₄ to the platform 3004.

The platform 3004 is generally thin and flat, and has first and second opposite faces 3018, 3019. The first face 3018 faces the base 3002 and the second face 3019 faces away from the base 3002. The second face 3019 (hereinafter referred to as the "upper face") supports an image sensor 3020, such as CCD or CMOS device.

The first bearing arrangement 3003 includes a pivot bearing 3021 substantially the same as hereinbefore described with reference to Figures 10 and 11A to 11D.

The pivot bearing 3021 includes a member 3022 (or "protrusion") upstanding from an upper face 3023 of the first part 3002 of the actuator assembly which serves as a base for the pivot. In some examples, the pivot bearing 3021 may include a separate base which is supported by the first part 3002 of the actuator assembly.

The protrusion 3022 has a distal end 3024 which contacts the platform 3004, in particular, a point (or area) of contact on the first face 3018 (herein after referred to either as the "bottom face" or "underside") of the platform 3004. The distal end 3024 of the protrusion 3022 and contact point define the pivot point 3008.

The free ends 3017₁, 3017₂, 3017₃, 3017₄ of the flexures 3015₁, 3015₂, 3015₃, 3015₄ are attached to the upper face 3023 of the first part 3002 of the assembly 3001 or the pivot bearing 3021. This urges the first part 3002 of the assembly and the platform 3004 together to maintain contact between the protrusion 3022 and the platform 3004.

Anchoring members 3026₁, 3026₂ for the shape memory alloy wires 3010₁, 3010₂, 3010₃, 3010₄ are rigidly attached to the first part 3002. The anchoring members 3026₁, 3026₂ can take the form of posts or other structures upstanding from the first part 3002 of the actuator assembly 3001. In this example, two anchoring members 3026₁, 3026₂ are provided, located in opposite corners of the first part 3002. More than two anchoring members 3026₁, 3026₂, however, may be provided. Crimps (not shown) are used to attached the shape memory alloy wires 3010₁, 3010₂, 3010₃, 3010₄ the anchoring members 3026₁, 3026₂.

The first part 3002 of the actuator assembly is formed a metal or metal alloy, such as stainless steel.

### - Second bearing arrangement 3005 -

Referring also to Figures 23 and 24, the platform 3002 lies in a first plane 3500 which is tiltable and which has a normal 3501 (herein also referred to as "the axis of tilt" or "tilt axis") such that tilting the platform 3002 tilts the normal 3501 away from primary axis.

The second bearing arrangement 3005 is configured to constrain tilting of the second part 3006 with respect to the platform 3002, to constrain (i.e. to resist or even to prevent, or to discourage) lateral movement of the second part 3006 in a second plane 3502 parallel to the first plane, and to guide axial movement of the second part 3006 along the normal 3501 relative to the platform 3002.

Unlike the first actuator assembly 2001 (Figure 17), the second bearing arrangement 3005 also constrains rotation of the second part 3006 around the normal 2501.

The second bearing arrangement 3005 comprises a z-translation bearing 3081 similar to that hereinbefore described with respect to Figure 16A.

A block 3084 extends perpendicular to the upper surface 3019 of the platform 3004. The block 3084 is generally cuboidal, with the exceptions of a circular hole 3085 having an axis substantially parallel to the third axis and first and second faces of the block 3084 including V-shaped channels 3086₁, 3086₂ oriented substantially parallel with the third axis z.

A pair of ball bearings 3030 is received into each V-shaped channel 3086₁, 3086₂, and the ball bearings 3030 are retained in the V-shaped channels 3086₁, 3086₂ by respective cuboidal protrusions 3089₁, 3089₂ which extend from the second plate 8083.

Although a single block 3084 and corresponding protrusions 3087, 3089₁, 3089₂, in some example two of more blocks 3084 may be used in conjunction with corresponding sets of corresponding protrusions 3087, 3089₁, 3089₂.

The second part 3006 includes an aperture 3090. First, second, third and fourth blocks 3100₁, 3100₂, 3100₃, 3100₄ project outwardly and from two, opposite corners 3101₁, 3101₂ of the second part 3006 and either upwardly or downwardly. The second part 3006 may be formed from a metal or metal alloy, such as stainless steel.

The first shape memory alloy wire 3010₁ is connected between the distal end of the first block 3100₁ and the first anchoring point 3026₁ and the second shape memory alloy wire 3010₂ is connected between the first anchoring point 3026₁ and the distal end of the second block 3100₂. The third shape memory alloy wire 3010₃ is connected between the distal end of the third block 3100₃ and the second anchoring point 3026₂ and the fourth shape memory alloy wire 3010₄ is connected between the second anchoring point 3026ₛ and the distal end of the fourth block 3100₄.

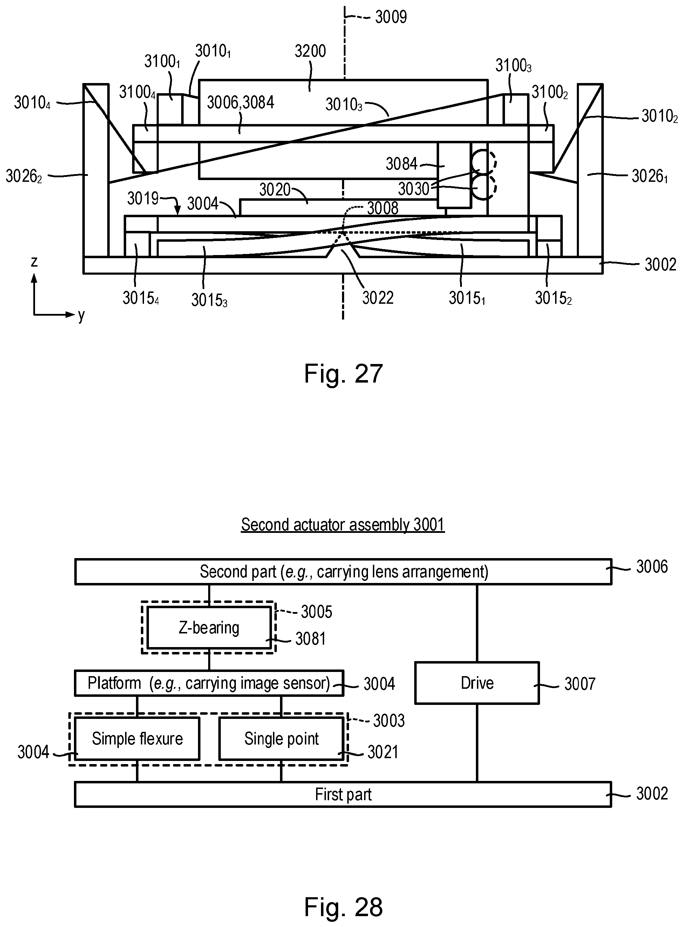

Referring in particular to Figure 27, a lens arrangement 3200 is supported by the second part 3006.

### - Movement -

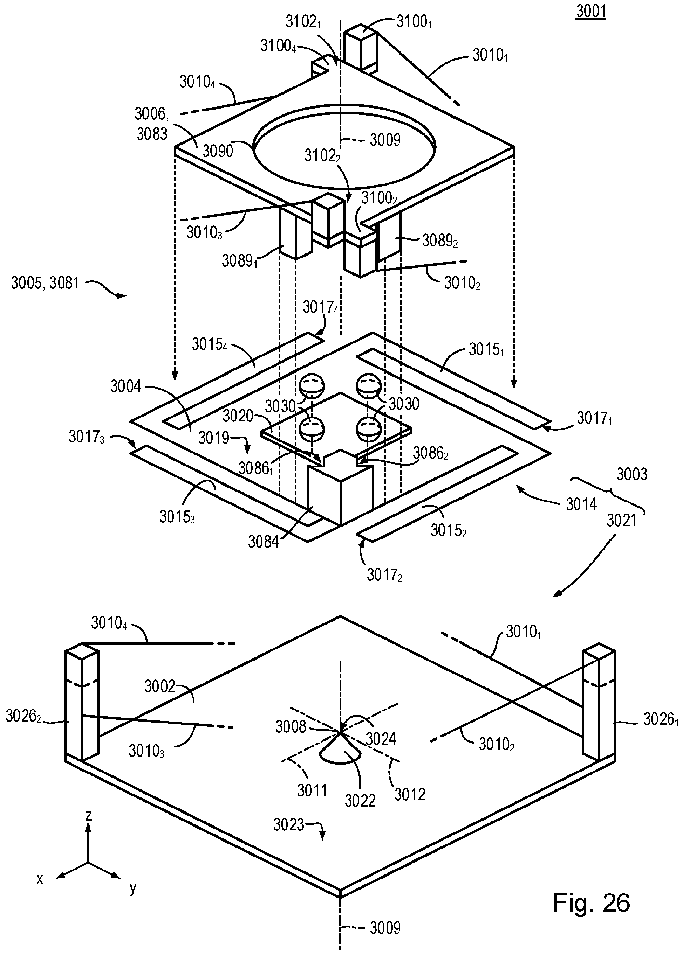

Referring again to Figures 26, 27 and 28, the first actuator assembly 3001 is able to provide OIS by tilting the platform 3004 and second part 3006 together about the first and second axes 3011, 3012 and AF by moving the second part 3006 relative to the platform 3004 along the normal 3501 (Figure 24).

Different movements are caused by heating and cooling different combinations of the SMA wires 3010₁, 3010₂, 3010₃, 3010₄. As explained hereinbefore, an SMA can be heated by driving a current through the SMA wire, which causes the SMA wire to contract.

A change in separation between the second part 3006 and the platform 3004 is brought about by increasing the power to, and hence contracting, two wires on opposite sides, for example, first and third wires 3010₁, 3010₃ while decreasing the power to, and hence allowing expansion of, the other two wires, namely second and fourth wires 3010₂, 3010₄. This results in the wires 3010₁, 3010₂, 3010₃, 3010₄ creating a helical force on the second part 3006. The first bearing arrangement 3003 resists rotation about Z. The second bearing arrangement 3005 coverts the helical force into vertical motion of the second part.

A change in tilt of the platform 3004 about a diagonal (e.g., about the line Y = - X) is brought about by increasing the power to, and hence contracting, two adjacent wires, for example, fourth and first wires 3010₄, 3010₁ while decreasing the power to, and hence allowing expansion of, the other two wires, in this example, second and third wires 3010₂, 3010₃, thereby producing a force on the second part 3004, in this case, along the line Y = X.

Suitable tilts can be produced as a linear combination of changes in diagonal tilts.

Translational movement of second part 3006 and, thus, the lens arrangement (not shown), can result in rotational movement of the second part 3006 around the normal 3501 (Figure 24).

If the SMA wire arrangement is spaced vertically from the first bearing and the first and second bearings resist motion in the X/Y plane, then the translation from the SMA wire arrangement is converted into tilt by the first bearing. Rotation about the second axis (i.e., Ry) is added to the motion along the first axis (i.e., Tx) and rotation about the first axis (i.e., Rx) is added to the motion along the second axis (i.e., Ty).

### Interchange of positions of the sensor and lens carriage

In the examples hereinbefore described, the sensor 2020 (Figure 21), 3020 (Figure 27) is mounted on the platform 2004 (Figure 21), 3004 (Figure 27) and the lens arrangement 2030 (Figure 21), 3200 (Figure 27) is mounted on the second part 2006 (Figure 21), 3006 (Figure 27). Expressed different, the sensor 2020 (Figure 21), 3020 (Figure 27) is tilted and with it the lens arrangement 2030 (Figure 21), 3200 (Figure 27) is also tilted and the position of the lens arrangement 2030 (Figure 21), 3200 (Figure 27) is varied with respect to the sensor 2020 (Figure 21), 3020 (Figure 27).

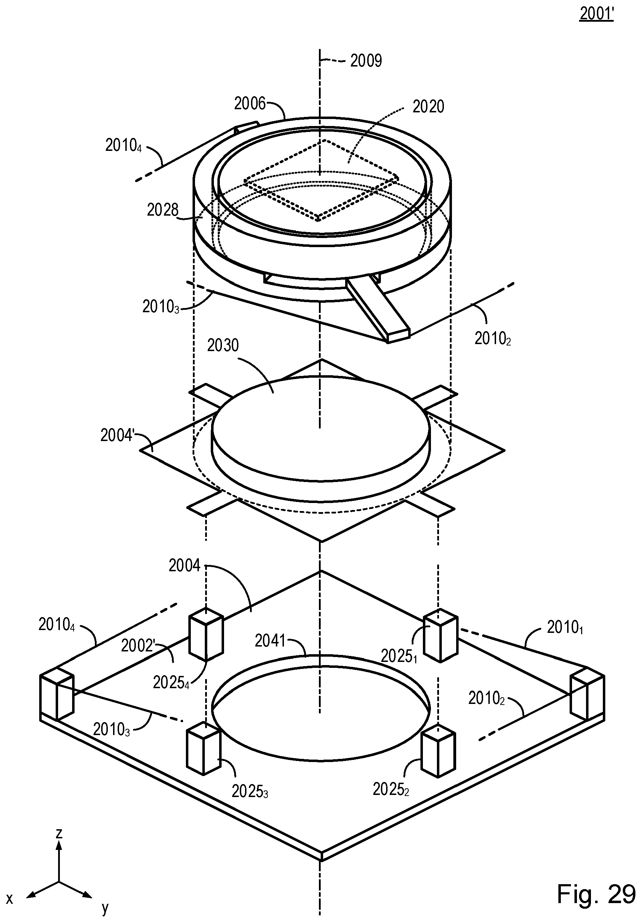

Referring to Figure 29, using another variant 2001' of the first actuator assembly as an example, the positions of the sensor 2020 and the lens arrangement 2030 can be swapped such that the lens arrangement 2030 is mounted on the platform 2004' and the sensor 2020 is mounted on the second part 2006. Again, expressed different, the lens arrangement 2030 is tilted and with it the sensor 2020 is also tilted and the position of the sensor 2020 is varied with respect to the sensor lens arrangement 2030.

In this arrangement, the first part 2002 is provided with an aperture 2041 through which light can pass and a suitable first bearing 2003 is used, for example, in the form of a gimbal, which can hold the lens arrangement 2030 and which can allow light to pass through it towards the sensor 2020. The gimbal 2003 may be supported on and fixed to a set of blocks 2025₁, 2025₂, 2025₃, 2025₄ upstanding form the first part 2002' of the assembly.

The second actuator assembly 3001 (Figure 26) hereinbefore described can be modified in a similar way.

### Modifications

It will be appreciated that there may be many other variations of the above-described embodiments.

For example, different SMA drive assemblies and different bearings hereinbefore can be suitably used in the actuator assemblies hereinbefore described.

In the description hereinbefore, parts have been described as rectangular, and this should be interpreted as encompassing square shapes. In the description hereinbefore, parts have been described as circular, and this should be interpreted as encompassing elliptical shapes.

The first to fourth SMA wires have been described and shown as directly connecting the first and second parts. However, in some examples the first to fourth SMA wires may indirectly connect the first and second parts, for example via one or more intermediate structures (not shown). Intermediate structures (not shown) may be configured to help extend the stroke of one or more SMA wires.

Herein, the term rectangular should be read as including square.

The actuator assembly may be any type of assembly that comprises a first part and a second part movable with respect to the first part. The actuator assembly may be, or may be provided in, any one of the following devices: a smartphone, a protective cover or case for a smartphone, a functional cover or case for a smartphone or electronic device, a camera, a foldable smartphone, a foldable smartphone camera, a foldable consumer electronics device, a camera with folded optics, an image capture device, an array camera, a 3D sensing device or system, a servomotor, a consumer electronic device, a mobile or portable computing device, a mobile or portable electronic device, a laptop, a tablet computing device, an e-reader, a computing accessory or computing peripheral device, an audio device, a security system, a gaming system, a gaming accessory, a robot or robotics device, a medical device, an augmented reality system, an augmented reality device, a virtual reality system, a virtual reality device, a wearable device, a drone, an aircraft, a spacecraft, a submersible vessel, a vehicle, and an autonomous vehicle, a tool, a surgical tool, a remote controller, clothing, a switch, dial or button, a display screen, a touchscreen, a flexible surface, and a wireless communication device. It will be understood that this is a non-exhaustive list of example devices.

## Claims

1. An actuator assembly (2001, 3001) comprising:
a first part (2002, 3002);
a first bearing arrangement (2003, 3003);
a platform (2004, 3004), wherein the first bearing arrangement (2003, 3003) supports the platform (2004, 3004) on the first part (2002, 3002) and wherein the platform (2004, 3004) is tiltable about first and/or second axes (2011, 2012; 3011, 3012) which are not parallel with respect to each other and which are perpendicular to a primary axis (2009, 3009) passing through the actuator assembly (2001, 3001);
a second bearing arrangement (2005, 3005);
a second part (2006, 3006), wherein the second bearing arrangement (2005, 3005) supports the second part (2006, 3006) on the platform (2004, 3004); and
a drive arrangement (2007, 3007) comprising four lengths of shape memory alloy wire (2010, 3010), wherein the lengths of shape memory alloy wire (2010, 3010) are connected to the second part (2006, 3006) and the first part (2002, 3002);
wherein the first bearing arrangement (2003, 3003) is configured to guide tilting of the platform (2004, 3004) about the first and/or second axes (2011, 2012; 3011, 3012) and to constrain rotation of the platform (2004, 3004) about the primary axis (2009, 3009),
wherein the platform (2004, 3004) defines a first plane (2500, 3500) which is tiltable and which has a normal (2501, 2501) such that tilting the platform (2004, 3004) tilts the normal (2501. 3501) away from the primary axis (2009, 3009), and
wherein the second bearing arrangement (2005, 3005) is configured to constrain tilting of the second part (2006, 3006) with respect to the platform (2004, 3004), to constrain lateral movement of the second part (2006, 3006) perpendicular to the normal (2501, 3501), and to guide axial movement of the second part (2006, 3006) along the normal (2501, 3501) relative to the platform (2004, 3004).

2. The actuator assembly (2001, 3001) of claim 1, wherein the first bearing arrangement (2003, 3003) comprises:
a flexure arrangement comprising:
a first pair of flexures extending from the platform constraining movement of the platform along the first axis; and
a second pair of flexures extending from the platform constraining movement of the platform along the second axis.

3. The actuator assembly (2001, 3001) of claim 1 or 2, wherein the first bearing arrangement (2003, 3003) comprises:
a pivot bearing;
wherein, optionally, the pivot bearing comprises:
a base; and
a pivot upstanding from the base plate or first part having a distal end, wherein the distal end of the pivot is arranged to contact the platform; and
wherein, further optionally, the platform is shaped so as to provide a seat for the distal end of the pivot.

4. The actuator assembly (2001, 3001) of claim 1, wherein the first bearing arrangement (2003, 3003) comprises:
a gimbal; wherein, optionally, the gimbal comprises: a thin web.

5. The actuator assembly (2001, 3001) of any one of claims 1 to 4, wherein the second bearing arrangement (2005, 3005) is configured to convert torque applied around the normal by the drive arrangement into movement of the second part along the normal relative to the platform; and/or wherein the second bearing arrangement (2005, 3005) comprises:
a helical flexure or a helical bearing;
wherein, optionally, the helical bearing comprises: a bearing surface defining a helical path;
wherein, further optionally, the helical bearing comprises: a sliding surface configured to mate with the bearing surface and to be guided by the bearing surface, and/or a
rolling bearing element arranged to be guided by the bearing surface.

6. The actuator assembly (2001, 3001) of any one of claims 1 to 5, wherein each of the four lengths of shape memory wire is co-planar with the first and second axes, or wherein each of the four lengths of the shape memory wire is not co-planar with the first and second axes.

7. The actuator assembly (2001, 3001) of any one of claims 1 to 6, wherein the second bearing arrangement (2005, 3005) is configured to constrain rotation of the second part about the normal.

8. The actuator assembly (2001, 3001) of claim 7, wherein the second bearing arrangement (2005, 3005) comprises a linear bearing; and
wherein, optionally, the linear bearing is laterally offset from the normal and/or the linear bearing comprises:
a set of one or more bearing surfaces which run parallel to the normal; and
a set of one or more sliding surfaces configured to be guides by the set of one of more bearing;
wherein the one or more bearing surfaces and the one or more sliding surfaces only allow movement parallel to the normal.

9. The actuator assembly (2001, 3001) of claim 7, wherein the second bearing arrangement (2005, 3005) comprises:
a first flexure arrangement comprising:
a first pair of flexure arms extending from a first central portion platform constraining movement of the platform along a third axis which is perpendicular to the normal; and
a second pair of flexure arms extending from the first central portion constraining movement of the platform along a fourth axis which is perpendicular to the normal;
a second flexure arrangement comprising:
a third pair of flexure arms extending from a second central portion platform constraining movement of the platform along a fifth axis which is perpendicular to the normal; and
a fourth pair of flexure arms extending from the second central portion constraining movement of the platform along the sixth axis which is perpendicular to the normal;
wherein the first and second central portions are offset along the normal and are rigidly coupled so as to move together.

10. The actuator assembly (2001, 3001) of any one of claims 8 to 9, wherein each of the four lengths of shape memory wire are inclined with respect to the primary axis.

11. The actuator assembly (2001, 3001) of any one of claims 1 to 10, further comprising: an image sensor (2020, 3020); and a lens (2030, 3030);
wherein, optionally, the image sensor (2020, 3020) is supported on the platform (2004, 3004) and the lens (2030, 3030) is supported on the second part, or
the lens (2030, 3030) is supported on the platform (2004, 3004) and the image sensor (2020, 3020) is supported on the second part (2006, 3006).

12. An optical device comprising:
a body;
a first optical element;
a second optical element; and
the actuator assembly (2001, 3001) of any one of claims 1 to 11;
wherein the first optical element and second optical element are generally aligned along an optical axis, and
wherein the first part of the actuator element is fixed with respect to the body and the first optical element, the second optical element and the second part are supported by the actuator assembly.

13. A method comprising using the actuator assembly (2001, 3001) according to any one of claims 1 to 11 for optical image stabilisation and/or automatic focussing.

## Patentansprüche

1. Aktoranordnung (2001, 3001), umfassend:
einen ersten Teil (2002, 3002);
eine erste Lageranordnung (2003, 3003);
eine Plattform (2004, 3004), wobei die erste Lageranordnung (2003, 3003) die Plattform (2004, 3004) an dem ersten Teil (2002, 3002) stützt, und wobei die Plattform (2004, 3004) um erste und/oder zweite Achsen (2011, 2012; 3011, 3012) kippbar ist, die nicht parallel in Bezug aufeinander sind, und die senkrecht zu einer Primärachse (2009, 3009) ist, die durch die Aktoranordnung (2001, 3001) verläuft;
eine zweite Lageranordnung (2005, 3005);
einen zweiten Teil (2006, 3006), wobei die zweite Lageranordnung (2005, 3005) den zweiten Teil (2006, 3006) auf der Plattform (2004, 3004) stützt; und
eine Antriebsanordnung (2007, 3007), umfassend vier Längen Formgedächtnislegierungsdraht (2010, 3010), wobei die Längen Formgedächtnislegierungsdraht (2010, 3010) mit dem zweiten Teil (2006, 3006) und dem ersten Teil (2002, 3002) verbunden sind;
wobei die erste Lageranordnung (2003, 3003) konfiguriert ist, um ein Kippen der Plattform (2004, 3004) um die erste und/oder zweite Achse (2011, 2012; 3011, 3012) zu führen und um eine Drehung der Plattform (2004, 3004) um die Primärachse (2009, 3009) einzuschränken,
wobei die Plattform (2004, 3004) eine erste Ebene (2500, 3500) definiert, die gekippt werden kann und eine Normale (2501, 2501) aufweist, sodass ein Kippen der Plattform (2004, 3004) die Normale (2501, 3501) weg von der Primärachse (2009, 3009) kippt, und
wobei die zweite Lageranordnung (2005, 3005) konfiguriert ist, um ein Kippen des zweiten Teils (2006, 3006) in Bezug auf die Plattform (2004, 3004) einzuschränken, um laterale Bewegung des zweiten Teils (2006, 3006) senkrecht zu der Normalen (2301, 3501) relativ zu der Plattform (2004, 3004) zu führen.

2. Aktoranordnung (2001, 3001) nach Anspruch 1, wobei die erste Lageranordnung (2003, 3003) Folgendes umfasst:
eine Biegeelementanordnung, umfassend:
ein erstes Paar Biegeelemente, die sich von der Plattform erstrecken, die Bewegung der Plattform entlang der ersten Achse einschränken; und
ein zweites Paar Biegeelemente, die sich von der Plattform erstrecken, die Bewegung der Plattform entlang der zweiten Achse einschränken.

3. Aktoranordnung (2001, 3001) nach Anspruch 1 oder 2, wobei die erste Lageranordnung (2003, 3003) Folgendes umfasst:
ein Drehlager;
wobei optional das Drehlager Folgendes umfasst:
eine Basis; und
einen Schwenkkörper, der von der Basisplatte oder dem ersten Teil mit einem distalen Ende aufrecht steht, wobei das distale Ende des Schwenkkörpers angeordnet ist, um die Plattform zu berühren; und
wobei, ferner optional, die Plattform so geformt ist, sodass sie eine Aufnahme für das distale Ende des Schwenkkörpers bereitstellt.

4. Aktoranordnung (2001, 3001) nach Anspruch 1, wobei die erste Lageranordnung (2003, 3003) Folgendes umfasst:
eine kardanische Aufhängung; wobei optional die kardanische Aufhängung Folgendes umfasst: einen dünnen Steg.

5. Aktoranordnung (2001, 3001) nach einem der Ansprüche 1 bis 4, wobei die zweite Lageranordnung (2005, 3005) konfiguriert ist, um Drehmoment, das um die Normale durch die Antriebsanordnung angewendet wird, in Bewegung des zweiten Teils entlang der Normalen relativ zu der Plattform umzuwandeln; und/oder wobei die zweite Lageranordnung (2005, 3005) Folgendes umfasst:
ein spiralförmiges Biegeelement oder ein spiralförmiges Lager;
wobei optional das spiralförmige Lager Folgendes umfasst: eine Lagerfläche, die einen spiralförmigen Weg definiert;
wobei, ferner optional, das spiralförmige Lager Folgendes umfasst: eine Gleitfläche, die konfiguriert ist, um sich mit der Lagerfläche zusammenzufügen, und um durch die Lagerfläche geführt zu werden, und/oder ein Wälzlagerelement, das angeordnet ist, um von der Lagerfläche geführt zu werden.

6. Aktoranordnung (2001, 3001) nach einem der Ansprüche 1 bis 5, wobei jede der vier Längen Formgedächtnisdraht koplanar mit der ersten und zweiten Achse ist oder wobei jede der vier Längen Formgedächtnisdraht nicht koplanar mit der ersten und zweiten Achse ist.

7. Aktoranordnung (2001, 3001) nach einem der Ansprüche 1 bis 6, wobei die zweite Lageranordnung (2005, 3005) konfiguriert ist, um eine Drehung des zweiten Teils um die Normale einzuschränken.

8. Aktoranordnung (2001, 3001) nach Anspruch 7, wobei die zweite Lageranordnung (2005, 3005) ein Linearlager umfasst; und
wobei, optional, das Linearlager von der Normalen seitlich versetzt ist, und/oder das Linearlager Folgendes umfasst:
eine Reihe von einer oder mehreren Lagerflächen, die parallel zur Normalen verlaufen; und
eine Reihe von einer oder mehreren Gleitflächen, die konfiguriert sind, um Führungen durch die Reihe von einem aus mehr Lager zu sein;
wobei die eine oder mehreren Lagerflächen und die eine oder mehreren Gleitflächen nur Bewegung parallel zur Normalen zulassen.

9. Aktoranordnung (2001, 3001) nach Anspruch 7, wobei die zweite Lageranordnung (2005, 3005) Folgendes umfasst:
eine erste Biegeelementanordnung, umfassend:
ein erstes Paar Biegeelementarme, die sich von einer ersten Plattform des Mittelabschnitts erstrecken, die Bewegung der Plattform entlang der dritten Achse einschränken, die senkrecht zu der Normalen ist; und
ein zweites Paar Biegeelementarme, die sich von dem ersten Mittelabschnitt erstrecken, die Bewegung der Plattform entlang der vierten Achse einschränken, die senkrecht zu der Normalen ist;
eine zweite Biegeelementanordnung, umfassend:
ein drittes Paar Biegeelementarme, die sich von einer zweiten Plattform des Mittelabschnitts erstrecken, die Bewegung der Plattform entlang einer fünften Achse einschränken, die senkrecht zu der Normalen ist; und
ein viertes Paar Biegeelementarme, die sich von dem zweiten Mittelabschnitt erstrecken, die Bewegung der Plattform entlang der sechsten Achse einschränken, die senkrecht zu der Normalen ist;
wobei der erste und zweite Mittelabschnitt entlang der Normalen versetzt sind und starr miteinander gekoppelt sind, sodass sie sich gemeinsam bewegen.

10. Aktoranordnung (2001, 3001) nach einem der Ansprüche 8 bis 9, wobei jede der vier Längen Formgedächtnisdraht in Bezug auf die Primärachse geneigt ist.

11. Aktoranordnung (2001, 3001) nach einem der Ansprüche 1 bis 10, ferner umfassend: einen Bildsensor (2020, 3020); und eine Linse (2030, 3030);
wobei, optional, der Bildsensor (2020, 3020) auf der Plattform (2004, 3004) gestützt wird und die Linse (2030, 3030) auf dem zweiten Teil gestützt wird, oder
die Linse (2030, 3030) auf der Plattform (2004, 3004) gestützt wird und der Bildsensor (2020, 3020) auf dem zweiten Teil (2006, 3006) gestützt wird.

12. Optische Vorrichtung, umfassend:
einen Körper;
ein erstes optisches Element;
ein zweites optisches Element; und
die Aktoranordnung (2001, 3001) nach einem der Ansprüche 1 bis 11;
wobei das erste optische Element und das zweite optische Element entlang einer optischen Achse allgemein ausgerichtet sind, und
wobei der erste Teil des Aktorelements in Bezug auf den Körper befestigt ist und das erste optische Element, das zweite optische Element und der zweite Teil von der Aktoranordnung gestützt werden.

13. Verfahren, umfassend das Verwenden der Aktoranordnung (2001, 3001) nach einem der Ansprüche 1 bis 11 zur optischen Bildstabilisation und/oder automatischen Fokussierung.

## Revendications

1. Ensemble actionneur (2001, 3001) comprenant :
une première partie (2002, 3002),
un premier agencement de palier (2003, 3003),
une plate-forme (2004, 3004), le premier agencement de palier (2003, 3003) supportant la plate-forme (2004, 3004) sur la première partie (2002, 3002) et la plate-forme (2004, 3004) étant inclinable sur un premier et/ou un deuxième axe (2011, 2012 ; 3011, 3012) qui ne sont pas parallèles l'un par rapport à l'autre et qui sont perpendiculaires à un axe principal (2009, 3009) traversant l'ensemble d'actionnement (2001, 3001),
un deuxième agencement de palier (2005, 3005),
une deuxième partie (2006, 3006), le deuxième agencement de palier (2005, 3005) supportant la deuxième partie (2006, 3006) sur la plate-forme (2004, 3004), et
un agencement d'actionnement (2007, 3007) comprenant quatre longueurs de fil en alliage à mémoire de forme (2010, 3010), les longueurs de fil en alliage à mémoire de forme (2010, 3010) étant reliées à la deuxième partie (2006, 3006) et à la première partie (2002, 3002) ;
le premier agencement de palier (2003, 3003) étant conçu pour guider l'inclinaison de la plate-forme (2004, 3004) sur les premier et/ou deuxième axes (2011, 2012 ; 3011, 3012) et à limiter la rotation de la plate-forme (2004, 3004) sur l'axe principal (2009, 3009),
la plate-forme (2004, 3004) définissant un premier plan (2500, 3500) qui est inclinable et qui possède une normale (2501, 3501), si bien que l'inclinaison de la plate-forme (2004, 3004) entraîne une inclinaison de la normale (2501, 3501) en l'éloignant de l'axe principal (2009, 3009), et
le deuxième agencement de palier (2005, 3005) étant conçu pour limiter l'inclinaison de la deuxième partie (2006, 3006) par rapport à la plate-forme (2004, 3004), pour limiter le déplacement latéral de la deuxième partie (2006, 3006) perpendiculairement à la normale (2501, 3501), et pour guider le déplacement axial de la deuxième partie (2006, 3006) le long de la normale (2501, 3501) par rapport à la plate-forme (2004, 3004).

2. Ensemble d'actionneur (2001, 3001) selon la revendication 1, dans lequel le premier agencement de palier (2003, 3003) comprend :
un agencement de flexion comprenant :
une première paire de flexions s'étendant à partir de la plate-forme et limitant le déplacement de la plate-forme le long du premier axe, et
une deuxième paire de flexions s'étendant à partir de la plate-forme et limitant le déplacement de la plate-forme le long du deuxième axe.

3. Ensemble d'actionneur (2001, 3001) selon la revendication 1 ou 2, dans lequel le premier agencement de palier (2003, 3003) comprend :
un palier pivotant,
le palier pivotant comprenant éventuellement :
une base, et
un pivot s'élevant à partir de la plaque de base ou une première partie présentant une extrémité distale, l'extrémité distale du pivot étant agencée pour venir en contact avec la plate-forme, et
la plate-forme étant en outre éventuellement formée de manière à fournir un siège à l'extrémité distale du pivot.

4. Ensemble d'actionneur (2001, 3001) selon la revendication 1, dans lequel le premier agencement de palier (2003, 3003) comprend :
un cardan, le cardan comprenant éventuellement : une fine âme.

5. Ensemble d'actionneur (2001, 3001) selon l'une quelconque des revendications 1 à 4, dans lequel le deuxième agencement de palier (2005, 3005) est conçu pour convertir un couple appliqué sur la normale par l'agencement d'actionnement en un déplacement de la deuxième partie le long de la normale par rapport à la plate-forme, et/ou dans lequel le deuxième agencement de palier (2005, 3005) comprend :
une flexion hélicoïdale ou un palier hélicoïdal,
le palier hélicoïdal comprenant éventuellement : une surface de palier définissant un trajet hélicoïdal,
le palier hélicoïdal comprenant, éventuellement par ailleurs : une surface de glissement conçue pour s'accoupler avec la surface de palier et pour être guidée par celle-ci, et/ou un élément de roulement agencé pour être guidé par la surface de palier.

6. Ensemble actionneur (2001, 3001) selon l'une quelconque des revendications 1 à 5, dans lequel chacune des quatre longueurs de fil à mémoire de forme est coplanaire avec les premier et deuxième axes, ou chacune des quatre longueurs de fil à mémoire de forme n'est pas coplanaire avec les premier et deuxième axes.

7. Ensemble actionneur (2001, 3001) selon l'une quelconque des revendications 1 à 6, dans lequel le deuxième agencement de palier (2005, 3005) est conçu pour limiter la rotation de la deuxième partie sur la normale.

8. Ensemble d'actionneur (2001, 3001) selon la revendication 7, dans lequel le deuxième agencement de palier (2005, 3005) comprend un palier linéaire,
le palier linéaire étant éventuellement décalé latéralement par rapport à la normale et/ou le palier linéaire comprenant :
un ensemble d'une ou plusieurs surfaces de palier qui s'étendent parallèlement à la normale, et
un ensemble d'une ou plusieurs surfaces de glissement conçues être guidées par l'ensemble d'une ou plusieurs surfaces de palier ;
la ou les surfaces de palier et la ou les surfaces de glissement ne permettant qu'un déplacement parallèle à la normale.

9. Ensemble d'actionneur (2001, 3001) selon la revendication 7, dans lequel le deuxième agencement de palier (2005, 3005) comprend :
un premier agencement de flexion comprenant :
une première paire de bras de flexion s'étendant à partir d'une première plate-forme de portion centrale, limitant un déplacement de la plate-forme le long d'un troisième axe qui est perpendiculaire à la normale, et
une deuxième paire de bras de flexion s'étendant à partir de la première portion centrale, limitant un déplacement de la plate-forme le long d'un quatrième axe qui est perpendiculaire à la normale ;
un deuxième agencement de flexion comprenant :
une troisième paire de bras de flexion s'étendant à partir d'une deuxième plate-forme de portion centrale, limitant un déplacement de la plate-forme le long d'un cinquième axe qui est perpendiculaire à la normale, et
une quatrième paire de bras de flexion s'étendant à partir de la deuxième portion centrale, limitant un déplacement de la plate-forme le long d'un sixième axe qui est perpendiculaire à la normale,
les première et deuxième portions centrales étant décalées le long de la normale et étant couplées de manière rigide de façon à se déplacer conjointement.

10. Ensemble actionneur (2001, 3001) selon l'une quelconque des revendications 8 et 9, dans lequel chacune des quatre longueurs de fil à mémoire de forme est inclinée par rapport à l'axe principal.

11. Ensemble actionneur (2001, 3001) selon l'une quelconque des revendications 1 à 10, comprenant en outre : un capteur d'image (2020, 3020) et un objectif (2030, 3030),
le capteur d'image (2020, 3020) étant éventuellement supporté sur la plate-forme (2004, 3004) et l'objectif (2030, 3030) étant supporté sur la deuxième partie, ou
l'objectif (2030, 3030) étant supporté sur la plate-forme (2004, 3004) et le capteur d'image (2020, 3020) étant supporté sur la deuxième partie (2006, 3006).

12. Dispositif optique comprenant :
un corps,
un premier élément optique,
un deuxième élément optique, et
l'ensemble actionneur (2001, 3001) selon l'une quelconque des revendications 1 à 11 ;
le premier élément optique et le deuxième élément optique étant globalement alignés le long d'un axe optique, et
la première partie de l'élément actionneur étant fixe par rapport au corps, et le premier élément optique, le deuxième élément optique et la deuxième partie étant supportés par l'ensemble actionneur.

13. Procédé comprenant l'utilisation de l'ensemble actionneur (2001, 3001) selon l'une quelconque des revendications 1 à 11 pour une stabilisation optique d'image et/ou une mise au point automatique.
